# EUROPEAN PATENT APPLICATION

(11) **EP 4 440 221 A1**
(43) Date of publication of application: **02.10.2024**
(21) Application number: 22897728.6
(22) Date of filing: 18.11.2022
(51) Int. Cl.: H04W 72/04

(54) **WIRELESS SENSING METHOD AND APPARATUS AND NETWORK SIDE DEVICE**

(30) Priority: 25.11.2021 CN 202111416113
(71) Applicant: VIVO MOBILE COMMUNICATION CO., LTD., Dongguan, Guangdong 523863 (CN)
(72) Inventor: LI, Jianzhi, Dongguan, Guangdong 523863 (CN); JIANG, Dajie, Dongguan, Guangdong 523863 (CN); YAO, Jian, Dongguan, Guangdong 523863 (CN); WU, Jianming, Dongguan, Guangdong 523863 (CN)
(74) Representative: Conti, Marco
(86) International application number: PCT/CN2022/132925
(87) International publication number: WO 2023/093645

(57) **Abstract**

This application discloses a wireless sensing method and apparatus, and a network-side device, and pertains to the communication field. The wireless sensing method in embodiments of this application includes: backscattering, by a first device, a target sensing signal to a wireless sensing signal receive end, where the target sensing signal comes from a wireless sensing signal transmit end, the wireless sensing signal transmit end includes a first terminal or a first network-side device, and the wireless sensing signal receive end includes a second network-side device.

## Description

### CROSS-REFERENCE TO RELATED APPLICATIONS

This application claims priority to Chinese Patent Application No.202111416113.6 filed in China on November 25, 2021, which is incorporated herein by reference in its entirety.

### TECHNICAL FIELD

This application pertains to the field of communications technologies, and specifically, relates to a wireless sensing method and apparatus, and a network-side device.

### BACKGROUND

In related technologies, sensing and communication systems are usually designed separately and occupy different frequency bands. Due to wide deployment of millimeter wave and massive multi-input multi-output (Multi Input Multi Output, MIMO) technologies, communication signals in future wireless communication systems often have high resolution in time domain and angle domain, which makes it possible to implement high-precision sensing by using communication signals. Therefore, the best way is to jointly design the sensing and communication systems to share same frequency bands and hardware, thereby improving frequency efficiency and reducing hardware costs. This has prompted research on integrated sensing and communication (Integrated Sensing And Communication, ISAC).

However, in the ISAC scenario, sensing devices with a conventional radio architecture include power-consuming radio frequency links that contain oscillators, mixers, digital-analog converters, and the like. Therefore, the sensing devices are relatively large and batteries have a relatively short service life, which limits the layout of the sensing devices in the ISAC, and further limits sensing performance of the ISAC system.

### SUMMARY

Embodiments of this application provide a wireless sensing method and apparatus, and a network-side device, so as to backscatter a target sensing signal by using a first device in an ISAC system, thereby improving sensing performance of the ISAC system.

According to a first aspect, a wireless sensing method is provided, where the method includes:
backscattering, by a first device, a target sensing signal to a wireless sensing signal receive end, where the target sensing signal comes from a wireless sensing signal transmit end, the wireless sensing signal transmit end includes a first terminal or a first network-side device, and the wireless sensing signal receive end includes a second network-side device.

According to a second aspect, a wireless sensing apparatus is provided, applied to a first device. The apparatus includes:
a backscattering module, configured to backscatter a target sensing signal to a wireless sensing signal receive end, where the target sensing signal comes from a wireless sensing signal transmit end, the wireless sensing signal transmit end includes a first terminal or a first network-side device, and the wireless sensing signal receive end includes a second network-side device.

According to a third aspect, a wireless sensing method is provided, where the method includes:
obtaining, by a wireless sensing signal receive end, second information, where the second information includes sensing requirement information and/or target sensing signal related configuration information corresponding to the sensing requirement information, and the wireless sensing signal receive end includes a second network-side device;
performing, by the wireless sensing signal receive end, according to the target sensing signal related configuration information, measurement on a target sensing signal sent by a wireless sensing signal transmit end and at least partially backscattered by a first device, so as to obtain a target measurement quantity, where the wireless sensing signal transmit end includes a first terminal or a first network-side device; and
determining, by the wireless sensing signal receive end, a target sensing result based on the target measurement quantity, or sending the target measurement quantity.

According to a fourth aspect, a wireless sensing apparatus is provided, applied to a wireless sensing signal receive end, where the wireless sensing signal receive end includes a second network-side device, and the apparatus includes:
a first obtaining module, configured to obtain second information, where the second information includes sensing requirement information and/or target sensing signal related configuration information corresponding to the sensing requirement information, and the wireless sensing signal receive end includes a second network-side device;
a measurement module, configured to perform, according to the target sensing signal related configuration information, measurement on a target sensing signal sent by a wireless sensing signal transmit end and at least partially backscattered by a first device, so as to obtain a target measurement quantity, where the wireless sensing signal transmit end includes a first terminal or a first network-side device; and
an execution module, configured to determine a target sensing result based on the target measurement quantity or send the target measurement quantity.

According to a fifth aspect, a wireless sensing method is provided, where the method includes:
obtaining, by a second device, sensing requirement information;
sending, by the second device, second information to at least one of a wireless sensing signal transmit end and a wireless sensing signal receive end, where the second information includes the sensing requirement information and/or target sensing signal related configuration information corresponding to the sensing requirement information, and the wireless sensing signal transmit end includes a first network-side device or a first terminal, and the wireless sensing signal receive end includes a second network-side device; and
obtaining, by the second device, at least one of a target measurement quantity and a target sensing result, where the target measurement quantity is a measurement quantity obtained by the wireless sensing signal receive end through measurement on a target sensing signal that is transmitted by the wireless sensing signal transmit end and at least partially backscattered by a first device, and the target sensing result is determined based on the target measurement quantity.

According to a sixth aspect, a wireless sensing apparatus is provided, applied to a second device. The apparatus includes:
a second obtaining module, configured to obtain sensing requirement information;
a first sending module, configured to send second information to at least one of a wireless sensing signal transmit end and a wireless sensing signal receive end, where the second information includes the sensing requirement information and/or target sensing signal related configuration information corresponding to the sensing requirement information, and the wireless sensing signal transmit end includes a first network-side device or a first terminal, and the wireless sensing signal receive end includes a second network-side device; and
a third obtaining module, configured to obtain at least one of a target measurement quantity and a target sensing result, where the target measurement quantity is a measurement quantity obtained by the wireless sensing signal receive end through measurement on a target sensing signal that is transmitted by the wireless sensing signal transmit end and at least partially backscattered by a first device, and the target sensing result is determined based on the target measurement quantity.

According to a seventh aspect, a wireless sensing system is provided, including: a first device, a wireless sensing signal transmit end, and a wireless sensing signal receive end; where
the wireless sensing signal transmit end includes a first network-side device or a first terminal, and the wireless sensing signal receive end includes a second network-side device;
at least one of the wireless sensing signal transmit end and the wireless sensing signal receive end is configured to obtain second information, where the second information includes the sensing requirement information and/or target sensing signal related configuration information corresponding to the sensing requirement information;
the wireless sensing signal transmit end is configured to determine the target sensing signal related configuration information based on the sensing requirement information and send a target sensing signal according to the sensing signal related configuration information, or the wireless sensing signal transmit end is configured to send the target sensing signal according to the obtained sensing signal related configuration information;
the first device is configured to backscatter the target sensing signal sent by the wireless sensing signal transmit end; and
the wireless sensing signal receive end is configured to perform measurement on a target sensing signal sent by the wireless sensing signal transmit end and at least partially backscattered by the first device, so as to obtain a target measurement quantity.

According to an eighth aspect, a network-side device is provided, where the network-side device includes a processor and a memory, and a program or instructions capable of running on the processor are stored in the memory. When the program or the instructions are executed by the processor, the steps of the method according to the third aspect or the fifth aspect are implemented.

According to a ninth aspect, a network-side device is provided, including a processor and a communication interface. In a case that the network-side device is a wireless sensing signal receive end, the communication interface is configured to obtain second information, where the second information includes sensing requirement information and/or target sensing signal related configuration information corresponding to the sensing requirement information; the communication interface is further configured to perform, according to the target sensing signal related configuration information, measurement on a target sensing signal sent by a wireless sensing signal transmit end and at least partially backscattered by a first device, so as to obtain a target measurement quantity, where the wireless sensing signal transmit end includes a first terminal or a first network-side device; and the processor is configured to determine a target sensing result based on the target measurement quantity, or the communication interface configured to send the target measurement quantity;
or,
in a case that the network-side device is a second device, the communication interface is configured to obtain sensing requirement information and send second information to at least one of the wireless sensing signal transmit end and the wireless sensing signal receive end, where the second information includes the sensing requirement information and/or sensing signal related configuration information corresponding to the sensing requirement information, and the wireless sensing signal transmit end includes a first network-side device or a first terminal, and the wireless sensing signal receive end includes a second network-side device; the communication interface is further configured to obtain at least one of a target measurement quantity and a target sensing result, where the target measurement quantity is a measurement quantity obtained by the wireless sensing signal receive end through measurement on a target sensing signal sent by the wireless sensing signal transmit end and at least partially backscattered by the first device, and the target sensing result is determined based on the target measurement quantity.

According to a tenth aspect, a wireless sensing system is provided, including a terminal and a network-side device, where the network-side device may be configured to execute the steps of the wireless sensing method according to the third aspect and the fifth aspect.

According to an eleventh aspect, a readable storage medium is provided, where a program or instructions are stored in the readable storage medium; and when the program or the instructions are executed by a processor, the steps of the method according to the first aspect are implemented, or the steps of the method according to the third aspect are implemented, or the steps of the method according to the fifth aspect are implemented.

According to a twelfth aspect, a chip is provided, where the chip includes a processor and a communication interface, the communication interface is coupled to the processor, and the processor is configured to run a program or instructions to implement the method according to the first aspect, or implement the method according to the third aspect, or implement the method according to the fifth aspect.

According to a thirteenth aspect, a computer program product is provided, where the computer program product is stored in a storage medium, and the computer program product is executed by at least one processor to implement the steps of the wireless sensing method according to the first aspect, the third aspect, or the fifth aspect.

According to a fourteenth aspect, a communications device is provided, and the communications device is configured to execute the method according to the first aspect, the third aspect, or the fifth aspect.

In the embodiments of this application, the first device backscatters the target sensing signal to the wireless sensing signal receive end, where the target sensing signal comes from the wireless sensing signal transmit end, the wireless sensing signal transmit end includes the first terminal or the first network-side device, and the wireless sensing signal receive end includes the second network-side device. In this way, the target sensing signal sent by the wireless sensing signal transmit end is at least partially backscattered to the wireless sensing signal receive end by using the backscattering function of the first device. This can avoid providing the wireless sensing signal transmit end and receive end at a position of the first device. The first device with the backscattering function features a small size and low power consumption because of no power-consuming radio frequency link, and can be more conveniently arranged in an ISAC system than the wireless sensing signal transmit end and receive end, thereby improving sensing performance of the ISAC system.

### BRIEF DESCRIPTION OF DRAWINGS

FIG. 1 is a schematic diagram of a wireless communication system to which the embodiments of this application are applicable;
FIG. 2 is a flowchart of a first wireless sensing method according to an embodiment of this application;
FIG. 3a is a first schematic diagram of a wireless sensing system to which a wireless sensing method provided in the embodiments of this application is applied;
FIG. 3b is a second schematic diagram of a wireless sensing system to which a wireless sensing method provided in the embodiments of this application is applied;
FIG. 3c is a third schematic diagram of a wireless sensing system to which a wireless sensing method provided in the embodiments of this application is applied;
FIG. 4 is a flowchart of a second wireless sensing method according to an embodiment of this application;
FIG. 5 is a flowchart of a third wireless sensing method according to an embodiment of this application;
FIG. 6 is a first schematic diagram of information exchange in a wireless sensing method according to an embodiment of this application;
FIG. 7 is a second schematic diagram of information exchange in a wireless sensing method according to an embodiment of this application;
FIG. 8 is a schematic structural diagram of a first wireless sensing apparatus according to an embodiment of this application;
FIG. 9 is a schematic structural diagram of a second wireless sensing apparatus according to an embodiment of this application;
FIG. 10 is a schematic structural diagram of a third wireless sensing apparatus according to an embodiment of this application;
FIG. 11 is a schematic structural diagram of a communications device according to an embodiment of this application;
FIG. 12 is a schematic structural diagram of a network-side device according to an embodiment of this application; and
FIG. 13 is a schematic structural diagram of another network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-Carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

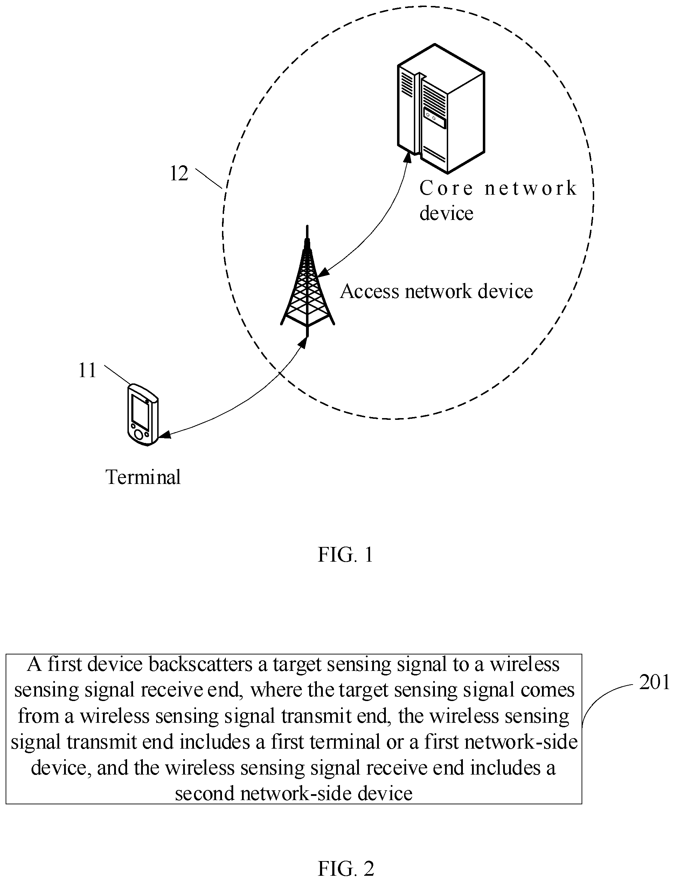

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network storage function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

In a first aspect, in recent decades, wireless communication and sensing (Communication&Sensing, C&S) has been developing in parallel, but intersection is limited. They have a lot in common in signal processing algorithms and devices, and system architecture to some extent. In recent years, more and more researchers have paid attention to coexistence, cooperation, and joint design of these two systems.

In the early days, people conducted extensive research on coexistence of the communication system and the radar system, focusing on the development of effective interference management technologies to make the two separately deployed systems operate smoothly without mutual interference. Although the radar and communication systems may be in a same location or even be physically integrated, they transmit two different types of signals in time/frequency domain. They share the same resources through cooperation to minimize mutual interference during working at the same time. The corresponding measures include beamforming, cooperative spectrum sharing, primary and secondary spectrum sharing, dynamic coexistence, and so on. However, effective interference cancellation usually imposes strict requirements on mobility of nodes and information exchange between nodes, actually limiting increase of spectrum efficiency. Because interference in the coexistence system is caused by transmitting two independent signals, it is natural to ask whether one transmit signal can be used for communication and radar sensing. The radar system usually uses specially designed waveforms, such as short pulses and chirp, which can achieve high power radiation and simplify processing of receivers. However, these waveforms are not necessary for radar detection. Passive radar or passive sensing takes different radio signals as sensing signals, which is a good example.

Machine learning, especially the deep learning technology, further promotes the potential of using non-dedicated radio signals for radar sensing. With such technologies, conventional radar is developing towards more general wireless sensing. Wireless sensing here may broadly refer to retrieving information from received radio signals, rather than modulating communication data onto the signals on the transmitter. For wireless sensing related to a location of a sensing target, dynamic parameters such as reflection delay, angle of arrival (Angle of Arrival, AOA), angle of departure (Angle of Departure, AOD), and Doppler of target signals can be estimated by using a common signal processing method. Physical characteristics of the sensing target can be implemented by measuring natural mode signals of devices, objects, and living things. The two sensing manners can be referred to as sensing parameter estimation and pattern recognition. In this sense, wireless sensing refers to more general sensing technologies and applications using radio signals.

Integrated sensing and communication (Integrated Sensing and Communication, ISAC) has the potential to integrate wireless sensing into large-scale mobile networks, which is referred to as perceptive mobile networks (Perceptive Mobile Networks, PMNs) here. The PMN may evolve from the current 5G mobile network, and is expected to become a ubiquitous wireless sensing network while providing stable and high-quality mobile communication services. It can be built on the existing mobile network infrastructure without major changes to the network structure and devices. It will release the maximum capacity of the mobile network and avoid spending high infrastructure costs to build a new wide-area wireless sensing network separately. With expansion of coverage, integrated communication and sensing capabilities are expected to implement many new applications. Sensing mobile networks can provide communication and wireless sensing services, and may become a ubiquitous wireless sensing solution because of its large broadband coverage and strong infrastructure. The joint and coordinated communication and sensing capabilities will improve the productivity of our society and help to spawn a large number of new applications that cannot be effectively realized by using existing sensor networks. Some early work of passive sensing using mobile signals has proved its potential, for example, traffic monitoring, weather forecast, and rainfall remote sensing based on radio signals of the global system for mobile communications (Global System for Mobile Communications, GSM). Perceptive mobile networks can be widely used in communication and sensing in the fields of transportation, communication, energy, precision agriculture, and security; however, the existing solutions are either infeasible or inefficient. It can also provide complementary sensing capabilities for existing sensor networks, and has a unique day-and-night operation function, which can penetrate fog, leaves, and even solid objects. Some common sensing services are shown in table 1 below.

**Table 1**

| Physical range of sensing | Real-time requirement for sensing | Sensing function | Applications |
|---|---|---|---|
| Large | Medium | Weather, air quality, and the like | Meteorological, agricultural, and living services |
| Large | Medium | Traffic flow (road) and crowd flow (subway station) | Smart city, intelligent transportation, and business services |
| Large | Medium | Animal activities, migration, or the like | Animal husbandry, ecological environment protection, and the like |
| Large | High | Target tracking, ranging, speed measurement, and angle measurement | Many application scenarios of conventional radars, V2X, and the like |
| Large | Low | Three-dimensional map construction | Navigation and smart city |
| Small | High | Action posture recognition | Intelligent interaction of smart phones, games and smart home |
| Small | High | Heartbeat/breathing or the like | Health monitoring and medical treatment |
| Small | Medium | Imaging | Security inspection and logistics |
| Small | Low | Material and substance | Construction, manufacturing, exploration, and the like |

However, in an ISAC system in related technologies, a large number of wireless sensing signal transmit ends and wireless sensing signal receive ends need to be arranged, so that the wireless sensing signal receive ends can determine sensing measurement quantities and sensing results based on received sensing signals sent by the wireless sensing signal transmit ends, and the wireless sensing signal transmit ends and the wireless sensing signal receive ends include power-consuming radio frequency links, including oscillators, mixers, digital-analog converters, and the like. This leads to a relatively large size of the sensing device and a relatively short service life of the battery, which limits the layout of the sensing devices in ISAC, and further leads to relatively low sensing performance of the ISAC system.

In the wireless sensing method proposed in the embodiments of this application, at least part of signals sent by the wireless sensing signal transmit end can be backscattered by a first device with less energy consumption and small size, so as to provide a new sensing path and even new sensing assistance information, thereby improving the sensing performance of the ISAC system.

In a second aspect, in related technologies, the low-power and low-complexity backscatter communications (Backscatter Communications, BSC) technology is a technology that simply relies on passive reflection and modulation of incident radio frequency (Radio Frequency, RF) waves. In recent years, driven by the progress of consumer electronics, the 5G communications technologies, and the big data analysis technologies supported by cloud computing, rapid growth of the Internet of things has attracted great attention from the industry and academia. One of the main open challenges for the Internet of things is that a large number of Internet of things devices are powered by batteries with limited capacity, resulting in a limited network life cycle. The BSC technology has become a promising technology to meet such challenge.

Specifically, the conventional radio architecture has a power-consuming radio frequency link, including an oscillator, a mixer and a digital-analog converter, which results in a relatively large device size, thereby greatly limiting a battery life for Internet of things devices. In contrast, for one backscattering node, there is no active radio frequency component, so the hardware has extremely low power consumption (for example, 10 µW). This facilitates large-scale deployment in various flexible scenarios and even implantation into the body.

In the past 20 years, the point-to-point BSC technology has been widely used in radio frequency identification (Radio Frequency Identification, RFID) applications. Passive RFID tags can report IDs to readers for near-field (usually several centimeters to one meter) query. At the early stage, the Internet of things is formed by RFID devices for logistics and inventory management. However, in the future, 6G Internet of things is expected to connect tens of billions of devices, so as to implement more complex tasks with more functions and bring a global impact. This requires that the communication capability and range (tens of meters) between Internet of things nodes far exceed the original RFID, that is, only supporting burst and low-rate transmission within several meters (only pre-written ID sequences of several bytes are transmitted). A communication distance of conventional RFID is in the order of m and a communication distance of next-generation BSC is generally expected to reach the order of km. The conventional RFID uses binary modulation, with a communication rate being generally not greater than 640 Kbps, and the next-generation BSC can use high-order modulation, with a communication rate reaching up to at least 10 Mbps or even 2 Gbps. Based on the existing BSC theory, advanced communication technologies such as small cellular network, full duplex, multi-antenna communication, large-scale access, and wireless power transmission, as well as micro-radios (such as button-sized radios) and low-power electronic device manufacturing have made the foregoing goals come true. To sum up, continuous development of the Internet of things provides many promising application scenarios for the BSC technology, making BSC a hot research direction in recent years.

Integration of communication and sensing is able to foster a series of new 6G applications. In addition to several typical sensing use cases listed in table 1, integration of communication and sensing based on low-power communications devices also becomes an important application scenario of 6G. In the embodiments of this application, compared with device-free (Device-free) wireless sensing in the related technologies, wireless sensing based on the radio frequency identification (Radio Frequency Identification, RFID) and backscatter communications (Backscatter Communications) technologies can implement basic sensing functions and also obtain additional sensing target information, which is expected to further enhance the performance of sensing/integrated communication and sensing. Because RFID and backscatter have the advantages of low costs, low power consumption, and large-scale deployment, RFID/backscatter-based sensing and integrated communication and sensing is expected to be widely used in 6G. For example, roadside units (Roadside Unit, RSU) with the sensing function in the Internet of vehicles can communicate with vehicles driving on the road by spontaneously sending and receiving integrated communication and sensing signals, and also implements vehicle positioning, speed measurement, and trajectory tracking. When an RFID or backscatter tag (tag) is installed on the vehicle, the tag can provide additional assistance information such as a vehicle ID and a current status of the vehicle. By receiving a reflected signal from the tag, the RSU can accurately identify and distinguish different vehicles on the road while implementing high-precision vehicle positioning, speed measurement, and trajectory tracking, thereby expanding the sensing capability. However, key technologies in RFID-based wireless sensing, such as waveform design for tag-based integrated communication and sensing, frame structure design, sensing scheme, and algorithm design, are all problems that need to be studied and resolved.

The embodiments of this application provide a wireless sensing scheme based on a backscattering function of a first device, so that the first device can be applied to wireless sensing.

With reference to the accompanying drawings, the following describes in detail, by using some embodiments and application scenarios thereof, a wireless sensing method and apparatus, a network-side device, and a terminal provided in the embodiments of this application.

Refer to FIG. 2. A first wireless sensing method provided in an embodiment of this application can be executed by a first device. The first device has a backscattering function, for example, the first device may include devices with the backscattering function (or referred to as backscattering function), such as a radio frequency identification (Radio Frequency Identification, RFID) tag and a backscattering (Backscatter) tag, which are not described one by one herein. For ease of description, in the following embodiments, the first device being a tag is used as an example for description, and the first device may include one tag or a tag array formed by a plurality of tags. Certainly, in addition to the tag, the first device may also include other devices with the backscattering function, or may even include other sensing components, which is not specifically limited herein.

As shown in FIG. 2, the first wireless sensing method may include the following steps.

Step 201: The first device backscatters a target sensing signal to a wireless sensing signal receive end, where the target sensing signal comes from a wireless sensing signal transmit end, the wireless sensing signal transmit end includes a first terminal or a first network-side device, and the wireless sensing signal receive end includes a second network-side device.

In implementation, the first device may have an antenna, and a signal collection range of the antenna is greater than or equal to a first distance between the first device and the wireless sensing signal receive end, and greater than or equal to a second distance between the first device and the wireless sensing signal transmit end, so that the target sensing signal from the wireless sensing signal transmit end can be collected by using the antenna of the first device, and the backscattered target sensing signal can be received by the wireless sensing signal receive end. Signal quality or signal strength of the target sensing signal received by the wireless sensing signal receive end meets a sensing condition corresponding to a sensing requirement, that is, the first device is located in coverage of the wireless sensing signal transmit end and the wireless sensing signal receive end, and the first device performs processes such as adjusting a matching impedance of the antenna to backscatter a wireless sensing signal collected by the antenna.

In specific implementation, the first device has a backscattering function, that is, the first device is a device with low power consumption and low complexity, and supports backscattering communication. The device supporting backscattering communication can send information by modulating and backscattering (hereinafter referred to as "reflection") wireless signals received from the environment, not requiring conventional communication modules such as power-consuming transceivers and amplifiers, thereby implementing extremely low power consumption and low cost communication. Optionally, the device supporting backscattering communication can choose to collect energy of surrounding wireless signals or other energy for its communication, thus implementing even zero-power consumption communication.

In addition, the wireless sensing signal transmit end may be a first network-side device (for example, a base station or a transmission and reception point (Transmit Receive Point, TRP)) or a first terminal, and the wireless sensing signal receive end may be a second network-side device (for example, a base station or a TRP).

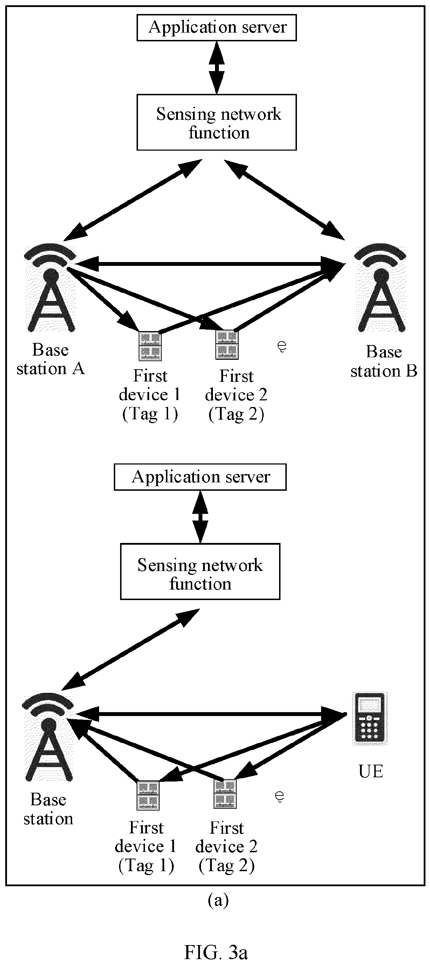

For example, as shown in FIG. 3a, the wireless sensing signal receive end may be a base station, and the wireless sensing signal transmit end can be a base station or a terminal. That is, a base station A sends a sensing signal, part or all of the signal is backscattered by a tag, and a base station B receives the sensing signal; or user equipment (User Equipment, UE) sends a sensing signal, part or all of the signal is backscattered by a tag, and a base station receives the sensing signal.

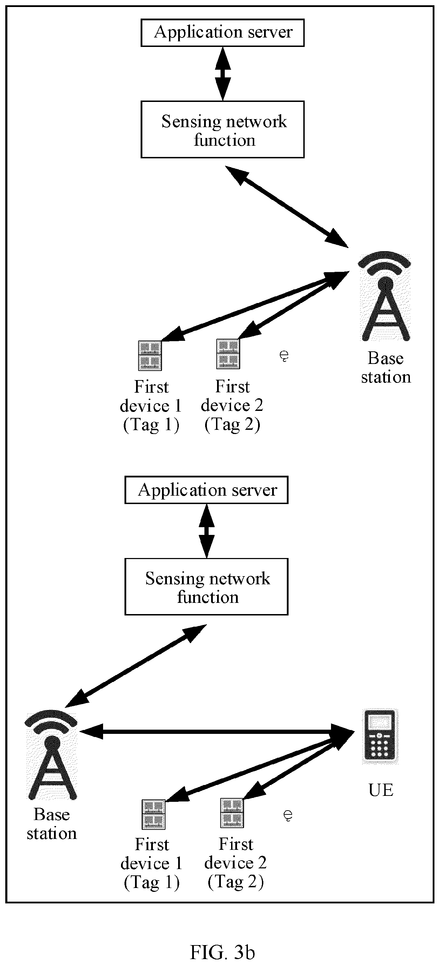

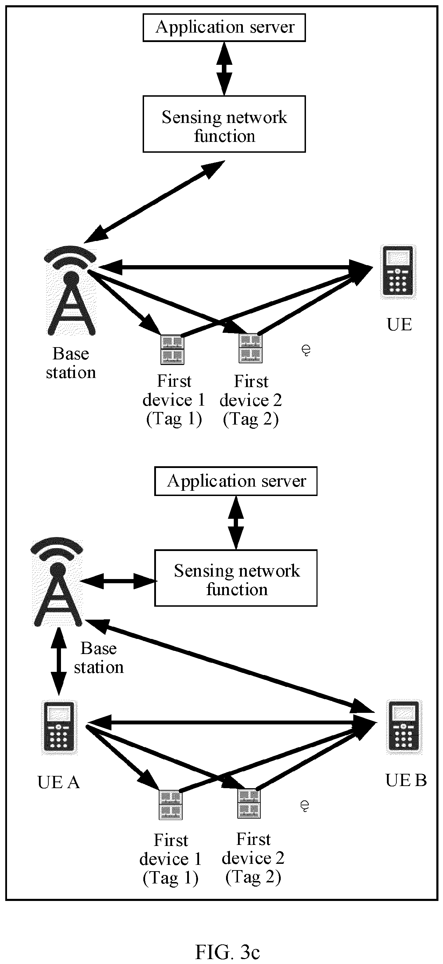

Certainly, in practical application, the wireless sensing signal receive end may alternatively be a terminal, or may be a same network-side device or a same terminal as the wireless sensing signal transmit end. For example, as shown in FIG. 3b and FIG. 3c, in the embodiment shown in FIG. 3b, the wireless sensing signal receive end and the wireless sensing signal transmit end are a same device (base station or terminal), that is, a base station transmits a sensing signal, part or all of the signal is backscattered by a tag, and the base station receives the sensing signal; or UE sends a sensing signal, part or all of the signal is backscattered by a tag, and the UE receives the sensing signal. In the embodiment shown in FIG. 3c, the wireless sensing signal receive end may be UE, and the wireless sensing signal transmit end can be a base station or a terminal. That is, UE A sends a sensing signal, part or all of the signal is backscattered by a tag, and UE B receives the sensing signal; or a base station sends a sensing signal, part or all of the signal is backscattered by a tag, and UE receives the sensing signal.

This embodiment of this application mainly describes the application scenario shown in FIG. 3a, that is, the base station receives the sensing signal that is sent by the terminal or another base station and at least partially backscattered by the first device, so as to obtain a sensing measurement quantity.

Optionally, before the backscattering, by a first device, a target sensing signal to a wireless sensing signal receive end, the method further includes:
receiving, by the first device, first indication information from the wireless sensing signal transmit end, where the first indication information is used to indicate first information that the first device needs to feed back to the wireless sensing signal receive end; and
the backscattering, by a first device, a target sensing signal to a wireless sensing signal receive end includes:
   modulating, by the first device, the first information onto the target sensing signal, so that the wireless sensing signal receive end receives a modulated target sensing signal.

In specific implementation, the first indication information is used to indicate specified first information that the first device modulates onto the target sensing signal. The target sensing signal can be understood as a sensing signal for sensing measurement.

In an optional implementation, the first indication information and the target sensing signal may be signals sent by the wireless sensing signal transmit end at different times, for example, the first device obtains the first indication information first, and then determines the first information according to the first indication information. After a time gap (time gap) elapses, the first device modulates the previously determined first information onto a sensing signal and backscatters the sensing signal, and the wireless sensing signal receive end receives the modulated sensing signal. That the first device modulates the first information onto the sensing signal can be understood as: the first device performs a process such as adjusting a matching impedance to affect an amplitude, or phase, or frequency of a sensing signal in the environment in which the first device is located, so as to modulate the sensing signal and make the sensing signal carry the first information.

In another optional implementation, the first indication information and the target sensing signal may be located in different information fields of a same signal, for example, a header area of a specific signal may carry the first indication information, and other areas of the signal may be considered as a sensing signal for sensing measurement.

In implementation, the first device may demodulate a received signal to obtain the first indication information, and according to indication of the first indication information, prepares the first information that needs to be modulated onto the backscattered sensing signal. In this case, the first device can provide additional first information, such as location information of the first device, information about a target sensing object to which the first device is attached, and the like. In this way, the first information may be used to provide assistance for the wireless sensing process, and the first information of the first device may even be directly used as a sensing result, thereby improving sensing performance of the wireless sensing process.

Optionally, the target sensing signal sent by the wireless sensing signal transmit end may be an unmodulated continuous wave (Continuous Wave, CW) signal, and that the first device modulates the first information onto the target sensing signal includes:
the first device modulates the first information onto the CW signal.

The first indication information may indicate which first information the first device needs to modulate onto the backscattered target sensing signal, for example, the first information includes a second measurement quantity collected by the first device, or includes other related information pre-stored in a tag. For example, the tag modulates the first information onto the CW signal.

In this implementation, the first device may modulate the first information onto the backscattered target sensing signal, so as to provide other information than the sensing measurement quantity for the sensing process. This helps improve sensing performance of the sensing system.

It should be noted that, in practical application, the target sensing signal received by the first device may also be of other signal types, and a manner in which the first device backscatters the target sensing signal and a manner in which the first information is carried in the backscattered target sensing signal can be adaptively adjusted, which is not specifically limited herein.

Certainly, in other embodiments, the first device may directly backscatter the sensing signal without obtaining the first indication information. In this case, the sensing signal backscattered by the first device may not carry the first information added by the first device.

For example, the sensing signal sent by the wireless sensing signal transmit end is a preset sensing signal sequence with known or predetermined signal configuration information, for example, a waveform, a bit sequence, and a frequency range. The preset sensing signal sequence is backscattered by the first device to the wireless sensing signal receive end, and the wireless sensing signal receive end can perform target signal processing based on the target sensing signal sequence and the preset sensing signal sequence to obtain a target measurement quantity. Target signal processing includes but is not limited to operations such as matched filtering, cross correlation, and sliding correlation, and a result of target signal processing is to obtain a target measurement quantity.

It should be noted that in practical application, the sensing signal sent by the wireless sensing signal transmit end may alternatively be at least two sensing signals sent at intervals, which is not specifically limited herein.

It should be noted that when receiving the target sensing signal at least partially backscattered by the first device, the sensing signal receive end may perform at least one of measurement, demodulation, and other processing on the target sensing signal to obtain the target measurement quantity. A target sensing result required for the target sensing requirement information is determined based on the target measurement quantity. Certainly, a node that determines the target sensing result based on the target measurement quantity may be a base station, UE, a core network, or an application server, which is not specifically limited herein. For example, the wireless sensing signal receive end may obtain a target sensing result through calculation based on the obtained target measurement quantity, and then directly or indirectly send the target sensing result to an initiator of a sensing service; or the sensing signal receive end may send the target measurement quantity to at least one of another base station, UE, the core network, or the application server, so that the at least one of the another base station, the UE, the core network, or the application server obtains a target sensing result through calculation, and then send it to the initiator of the sensing service.

It should be noted that, compared with a manner in which only a base station and a user mobile terminal participate in sensing (that is, a base station spontaneously sends and receives a sensing signal, the base station A sends a sensing signal and the base station B receives the sensing signal, a sensing signal is sent and received between the base station and the terminal, the terminal spontaneously sends and receives a sensing signal, and a terminal A sends a sensing signal and a terminal B receives the sensing signal), adding a tag has the following advantages:
(1) The tag features low power consumption, low costs, and small volume, and is very suitable for large-scale deployment in the environment, which therefore can greatly increase a sensing range (increase a sensing physical distance, physical angle range, and sensing network density) and improve sensing performance (increase a sensing resolution, reduce a sensing error, increase a sensing signal-to-noise ratio, and the like), compared with the foregoing sensing manner.
(2) The tag can be deployed in the environment or may be deployed on a sensing target. Regardless of a deployment position, additional sensing information (environmental information and sensing target object information) can be provided for the sensing side, to assist device-free (device-free) sensing to improve sensing performance. This also has lower power consumption and fewer signaling overheads than device-based (device-based) sensing.
(3) Through artificial design, the backscattering characteristics of the tag are more stable than the reflection characteristics of the object for device-free sensing; therefore the tag is relatively less affected by a sensing distance and a sensing (observation) direction, and is easier to be detected by a sensing side, thus improving the sensing robustness.
(4) A deployment mode of the tag is flexible. By cleverly deploying several tags or tag arrays on some paths where sensing signals are difficult to propagate, it is expected to implement sensing blindness compensation.
(5) Information stored in the tag (such as a tag ID, tag location coordinates, the number of tags, a tag communication capability, and physical information of a target to which the tag belongs) can be stored as a-priori information in a sensing network function (Sensing Network Function, SNF) or similar network function of the core network at an early stage of deployment, or the a-priori information stored by the tag can be read by a base station or terminal accessed by the tag, thereby providing a richer and more flexible sensing scheme for the network.
(6) Costs of the tag itself are much lower than those of the base station and the terminal, and a future next-generation backscattering tag itself has a strong communication function. Therefore, tag-based sensing naturally becomes an economical, efficient, and low-complexity way to realize integration of communication and sensing.

It should be noted that in application, the target sensing signal may be a sensing signal of a specific sensing service, such as weather monitoring, reconstruction of three-dimensional maps, traffic/crowd sensing, air quality detection such as PM2.5 monitoring, monitoring of pollutants in factories, monitoring of farm animals, or recognition of human actions/postures.

An initiator of the sensing service may be a third-party application, a core network (or a network management system or a base station), or UE.

### Specific embodiment 1

For the wireless sensing system shown in FIG. 3a, if a sensing service is initiated by a third-party application, the sensing method provided in this embodiment of this application may include the following steps:
Step (1) The application server receives a sensing requirement from the third-party application. For example, the sensing requirement is a three-dimensional map of a sensing target region (accuracy/resolution of the map is 5m), the target region may be a designated region such as a surrounding area of a building, or a surrounding area of the target UE. The sensing requirement may include information about the target region, such as information of latitude and longitude (range) of the region.
Step (2) An application server (including an intra-network server such as an IP multimedia subsystem (IP Multimedia Subsystem, IMS), or including an inter-network server) sends a sensing requirement to a core network (such as an access and mobility management function (Access and Mobility Management Function, AMF)) or a sensing network function/sensing network element of the core network, such as a sensing network function (Sensing Network Function, SNF). Alternatively, the application server sends the sensing requirement to the AMF, and the AMF forwards the requirement to the sensing network function/sensing network element.
Step (3) The core network function or network element (such as the sensing network function/sensing network element) determines an associated base station, UE, and tag according to the sensing requirement, and sends the sensing requirement information and/or the sensing signal related configuration information to the associated base station A or UE; or may send the sensing requirement information and/or the sensing signal related configuration information to a wireless sensing signal receive base station (that is, the base station shown in FIG. 3a or the base station B, which will be collectively referred to as the base station B for ease of description). It should be noted that, in a case that the base station sends a sensing signal, or that the base station schedules the UE A to send a sensing signal, or that the base station participates in determining a configuration for sending the sensing signal by the UE A, or that the base station is responsible for converting a target measurement quantity to a sensing result, the core network function or network element (such as a sensing network function/sensing network element) determines an associated base station based on the sensing requirement, and sends the sensing requirement and/or the sensing signal related configuration corresponding to the sensing requirement to the associated base station.
Step (4) The core network (or the sensing network element) or the wireless sensing signal transmit end (that is, the base station A or UE shown in FIG. 3a) sends the sensing signal related configuration information (including time-frequency information, sequence information, or the like) or the sensing requirement to the base station B.
Step (5) The core network (or the sensing network element) or the wireless sensing signal transmit end (that is, the base station A or UE shown in FIG. 3a) sends, to the base station B (the receive base station), a type of measurement quantity (such as AOA, AOD, time delay, signal receive power, or radar spectrum information) related to a sensing signal to be measured by the UE B. It should be noted that, in a case that the type of measurement quantity is determined by the base station B based on the sensing requirement, the core network (or the sensing network element) or the base station A or the UE does not require an independent signal to indicate the type of measurement quantity (for example, the base station B determines the type of measurement quantity according to a mapping table from sensing requirements to measurement quantity types).
Step (6) The base station A or the UE sends a sensing signal, where the base station A or the UE may send the sensing signal in a beam sweeping (beam sweeping) manner.
Step (7) The base station B receives a sensing signal at least partially backscattered by the tag to obtain a target measurement quantity.
Step (8) Determine a target sensing result based on the target measurement quantity.

In implementation, at least one of the core network, the application server, the base station, or the UE can determine the target sensing result based on the target measurement quantity.

Manner 1: If conversion from the target measurement quantity to the target sensing result is performed by the core network or the application server, the foregoing step (8) may include the following specific processes:
Step (81a) The base station B sends the target measurement quantity to the core network (or the sensing network element); or the base station B sends the target measurement quantity to the base station A or UE, and the base station A or UE sends the target measurement quantity to the core network (or the sensing network element).
Step (82a) The core network (or the sensing network element) sends the target measurement quantity to the application server, and the application server determines a target sensing result based on the target measurement quantity; or the core network (or the sensing network element) determines a target sensing result based on the target measurement quantity and sends the target sensing result to the application server.
Step (83a) The application server sends the target sensing result to the third-party application.

Manner 2: If conversion from the target measurement quantity to the target sensing result is performed by the base station, the foregoing step (8) may include the following specific processes:
Step (81b) The base station B determines a target sensing result based on the target measurement quantity, and sends the target sensing result to the core network (or the sensing network element).
Step (82b) The core network (or the sensing network element) sends the target sensing result to the application server.
Step (83b) The application server sends the target sensing result to the third-party application.

Manner 3: If conversion from the target measurement quantity to the target sensing result is performed by the UE, the foregoing step (8) may include the following specific processes:
Step (81c) The base station B sends the target measurement quantity to the UE (which may be UE sending the target sensing signal or UE specified in advance); or the base station B sends the target measurement quantity to a core network function or network element (such as a sensing network function/sensing network element), and the core network function or network element (such as a sensing network function/sensing network element) sends the measurement quantity to the UE.
Step (82c) The UE determines a target sensing result based on the target measurement quantity, and sends the target sensing result to the core network (or the sensing network element).
Step (83c) The core network (or the sensing network element) sends the target sensing result to the application server.
Step (84c) The application server sends the target sensing result to the third-party application.

### Specific embodiment 2

In a case that the sensing service is initiated by the core network (or a network management system or a base station), a difference between the sensing method provided in this embodiment of this application and the specific embodiment 1 is as follows:
A core network function or network element (such as a sensing network function/sensing network element) obtains a sensing requirement and/or sensing signal related configuration from an AMF of the core network; or the AMF receives a sensing requirement or sensing signal related configuration information sent by a network management system and forwards it to the sensing network element; or the AMF receives a sensing requirement or sensing signal related configuration information sent by a base station initiating the sensing service and forwards it to the sensing network element (certainly, a sensing requirement or sensing signal related configuration information of the wireless sensing signal transmit end (the base station A or UE) may be directly sent to the wireless sensing signal receive end (the base station B), without being sent to the core network.)
After the wireless sensing signal receive end obtains the target measurement quantity, a node that completes conversion from the target measurement quantity to the target sensing result may directly or indirectly send the target sensing result to the initiator of the sensing service.

For example, if conversion from the target measurement quantity to the target sensing result is completed by the core network, the initiator of the sensing service may obtain the target sensing result in the following manner:
the base station B sends the target measurement quantity to the core network (the AMF or the sensing network element); or the base station B sends the target measurement quantity to the base station A or UE, and the base station A or UE sends the target measurement quantity to the core network (the AMF or the sensing network element);
the core network (the AMF or the sensing network element) converts the target measurement quantity into a target sensing result;
if the sensing requirement of the core network comes from the network management system, the core network sends the target sensing result to the network management system; or the core network sends the target measurement quantity to the network management system, and the network management system converts the target measurement quantity into the target sensing result; and
if the target sensing requirement of the core network comes from the base station, the core network sends the target sensing result to the base station.

For another example, if conversion from the target measurement quantity to the target sensing result is completed by the base station, the initiator of the sensing service may obtain the target sensing result in the following manner:
the base station B determines a target sensing result based on the target measurement quantity, and sends the target sensing result to the core network (the AMF or the sensing network element);
if the sensing requirement of the core network comes from the network management system, the core network sends the target sensing result to the network management system; and
if the sensing requirement of the core network comes from the base station, the core network sends the target sensing result to the base station.

For another example, if conversion from the target measurement quantity to the target sensing result is completed by the UE, the initiator of the sensing service may obtain the target sensing result in the following manner:
the base station B sends the target measurement quantity to the UE (which may be UE sending the target sensing signal or UE specified in advance), or the base station B sends the target measurement quantity to a core network function or network element (such as a sensing network function/sensing network element), and the core network function or network element (such as a sensing network function/sensing network element) sends the target measurement quantity to the UE;
the UE determines a target sensing result based on the target measurement quantity, and sends the target sensing result to the core network (the AMF or the sensing network element);
if the sensing requirement comes from the network management system, the core network sends the target sensing result to the network management system; and
if the sensing requirement comes from the base station, the core network sends the target sensing result to the base station.

It should be noted that when the sensing network function/sensing network element is deployed in the base station, the core network may not participate in the whole sensing process, for example, the base station or UE initiates the sensing service, and the conversion from the target measurement quantity to the target sensing result is completed by the UE or the base station.

### Specific embodiment 3

In a case that the sensing service is initiated by UE (UE that sends a target sensing signal, UE that is served by a base station that sends a target sensing signal, or other UEs, which is collectively referred to as a UE initiating the sensing service in this embodiment for ease of description), a difference between the sensing method provided in this embodiment of this application and the specific embodiment 1 is as follows:
the UE initiating the sensing service sends a sensing request (including sensing requirement information) and/or sensing signal related configuration information to the AMF via non-access stratum (Non Access Stratum, NAS) signaling, and then the AMF forwards the sensing requirement information and/or sensing signal related configuration information to the sensing network element; and
after the wireless sensing signal receive end obtains the target measurement quantity, a node that completes conversion from the target measurement quantity to the target sensing result may directly or indirectly send the target sensing result to the initiator of the sensing service.

For example, if conversion from the target measurement quantity to the target sensing result is completed by the core network, the initiator of the sensing service may obtain the target sensing result in the following manner:
the base station B sends the target measurement quantity to the core network (the AMF or the sensing network element); or the base station B sends the target measurement quantity to the sensing signal transmit end (the base station A or UE), and the base station A or UE sends the target measurement quantity to the core network (the AMF or the sensing network element);
the core network (the AMF or the sensing network element) converts the target measurement quantity into a target sensing result; and
the core network (the AMF or the sensing network element) sends the target sensing result to the UE initiating the sensing service (via NAS signaling); or the core network (the AMF or the sensing network element) sends the target sensing result to an associated base station of the UE initiating the sensing service, and the associated base station sends the target sensing result to the UE initiating the sensing service.

For another example, if conversion from the target measurement quantity to the target sensing result is completed by the base station, the initiator of the sensing service may obtain the target sensing result in the following manner:
the base station B converts the target measurement quantity into a target sensing result, and sends the target sensing result to the core network (the AMF or the sensing network element).

The core network (the AMF or the sensing network element) sends the sensing result to the UE initiating the sensing service (via NAS signaling); or the core network (the AMF or the sensing network element) sends the sensing result to an associated base station of the UE initiating the sensing service, and the associated base station sends the sensing result to the UE initiating the sensing service.

For another example, if conversion from the target measurement quantity to the target sensing result is completed by the UE (which may be the UE initiating the sensing service), the initiator of the sensing service may obtain the target sensing result in the following manner:
the base station B sends the target measurement quantity to the UE; or the base station B sends the target measurement quantity to the core network (the AMF or the sensing network element), and the core network (the AMF or the sensing network element) sends the target measurement quantity to the UE (via NAS signaling); or the base station B sends the target measurement quantity to the core network (the AMF or the sensing network element), the core network (the AMF or the sensing network element) sends the target measurement quantity to an associated base station of the UE, and then the associated base station sends the target measurement quantity to the UE; and
the UE determines the target sensing result based on the target measurement quantity.

It should be noted that when the sensing network function/sensing network element is deployed in the base station, the core network may not participate in the whole sensing process, for example, the UE initiates the sensing service, and the conversion from the target measurement quantity to the target sensing result is completed by the UE or the base station.

It should be noted that in implementation, the foregoing process of determining the target sensing result (for example, three-dimensional map) based on the target measurement quantity (for example, angle information or signal received power information) can be completed by the UE or the base station A or the base station B, or the core network, or the application server. Related information of the base station A or UE, such as antenna position, synchronization information (SFN start time), AI related information (for example, AI training data), and the like can also be sent to a node that completes conversion of the target measurement quantity to the target sensing result, so as to assist in completing the conversion process. In addition, a charging function is completed in the core network or application server.

For ease of description, the core network function or network element (such as the sensing network function/sensing network element) is collectively referred to as a second device in the following embodiments. The second device may be a sensing network function/sensing network element in the core network or a sensing network function/sensing network element in the access network, which is not specifically limited herein.

Using the second device as an SNF as an example, the second device satisfies at least one of the following characteristics:
(1) The SNF is capable of exchanging target information with target UE (including the UE shown in FIG. 3a), or a serving base station of the target UE, or a target tag (that is, the tag participating in the sensing process), or a serving base station of the target tag, or a base station associated with a target area, so as to obtain a target sensing result or a target measurement quantity (uplink measurement quantity or downlink measurement quantity), where the target information includes a processing sensing request, an interactive sensing capability, an interactive sensing assistance data, an interactive sensing measurement quantity, or a sensing result.
(2) The SNF is capable of determining a to-be-used sensing type based on factors such as a possible type of sensing client, required sensing quality of service (Quality of Service, QoS), sensing capability of the UE, and sensing capability of the base station. The foregoing sensing manners are the three sensing types corresponding to FIG. 3a to FIG. 3c respectively.
(3) The SNF is capable of storing and managing (including adding, deleting, and updating) a-priori information or capability information of tags associated with a target tag area (for ease of description, in the following embodiments, the a-priori information or capability information of the tag is collectively referred to as first information). The first information includes at least one of the following: a tag ID list (not limited to RFID electronic product code EPC code, or may also be an ID of a new device), the number of tags in the associated area, a tag location information list (two-dimensional or three-dimensional, Cartesian coordinates or polar coordinates including a tag and a reference system origin), a tag sensing distance list, a tag working bandwidth list, a tag per-channel working frequency (that is, subcarrier frequency within bandwidth) list, a tag modulation mode list, supported read-write frequency, a signal-to-noise ratio of the reflected signal of the tag, the number of transmit antennas for a single tag, the number of receive antennas for a single tag, antenna arrangement information of a single tag (antenna spacing of a single tag, antenna formation, and the like), array arrangement information of the tag (which refers to a tag array formed by a plurality of tags, one tag being considered as one array element, including tag spacing, tag array formation, or the like), error statistical distribution parameters of a reflected signal phase of the tag, and a power supply mode for the tag (including passive, semi-passive, and active), active tag power information, an energy storage capability (that is, a maximum energy storage capability of the tag), an amplitude modulation capability of the tag (that is, amplitude information of adjustable reflected signals supported, continuous amplitude modulation or discrete amplitude modulation, and the number of states of corresponding continuous or discrete characteristics), a phase modulation capability of the tag (that is, phase information of adjustable reflected signals supported, continuous phase modulation or discrete phase modulation, and the number of states of corresponding continuous or discrete characteristics), a frequency modulation capability of the tag (that is, frequency information of adjustable reflected signals supported, continuous frequency modulation or discrete frequency modulation, and the number of states of corresponding continuous or discrete characteristics), an encryption algorithm type (such as cyclic redundancy check (Cyclic Redundancy Check, CRC) 16 or CRC 24) of the tag, type of channel coding (such as forward error correction (Forward Error Correction, FEC) code), a corresponding coding rate, and so on.

It should be noted that at least one of the a-priori information or the capability information of the tag is reported by the target tag to the network-side device such as the base station or SNF, for example, the first information is read and reported by a reader (such as a base station accessed by the tag) of the tag.

Optionally, the first information includes at least one of the following: an identifier of the first device, status indication information about the first device participating in sensing (which may be a participation sensing flag bit (indicating whether it is allowed or agreed to participate in sensing currently)), a sensing time period of the first device (indicating a start and end time/duration of participation in sensing), a sensing service occupancy flag bit (or status indication information with a same meaning, indicating whether sensing service is currently being conducted), an incident angle and reflection angle range of the first device (the incident angle range is an incident angle range of the sensing signal that enables the tag to work normally; and the reflection angle range is a reflection angle range of a reflected signal of the tag), the number of first devices in an associated area, location information of the first device (two-dimensional or three-dimensional, Cartesian coordinates or polar coordinates including a tag and a reference system origin), a sensing distance of the first device, a working bandwidth of the first device, a working frequency of channels of the first device (that is, subcarrier frequency within bandwidth), a modulation mode of the first device, a read-write frequency supported by the first device, array form information of the first device (including the number of array elements of a single tag array (one tag serves as one array element, the number of antennas of a single tag, and antenna arrangement information of a single tag)), a signal-to-noise ratio of a reflected signal of the first device, the number of transmit antennas of a single first device, the number of receive antennas of the single first device, antenna arrangement information of the single first device, arrangement information of an array including at least two first devices, an error statistical distribution parameter of a reflected signal phase of the first device, a power supply mode of the first device, power information of an active first device, an energy storage capability of the first device (whether the tag is active, or power information of the active tag), an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

(4) The SNF is capable of determining an association between the base station and the tag in the sensing area based on location information of the base station mastered by the SNF or obtained by the SNF from the AMF and first information stored in tags associated with the target tag area. The association criterion is to ensure that a signal-to-noise ratio of the sensing signal reflected by the tag and received by the base station meets requirements (such as meeting a QoS requirement and meeting a sensing condition corresponding to the sensing requirement information), and the sensing distance is greater than or equal to a distance between the base station and the tag.

In implementation, the first device participating in sensing needs to access the wireless sensing signal transmit end and the wireless sensing signal receive end, and a sensing signal strength between the first device and the wireless sensing signal transmit end and a signal strength between the first device and the wireless sensing signal receive end meet a sensing condition corresponding to the sensing requirement information. For example, assuming that the first device is a tag, and the wireless sensing signal transmit end and the wireless sensing signal receive end each are a base station, after obtaining the target sensing requirement information, the SNF or the core network AMF can determine a tag participating in sensing, a base station A sending the target sensing signal, and a base station B receiving the target sensing signal based on the sensing requirement and pre-obtained capability information and location information of the tags and base stations.

For example, a tag in a target sensing area corresponding to the sensing requirement is determined as a tag participating in sensing, and a base station A and a base station B are determined based on base stations accessed by the tag participating in sensing and based on capability information and/or location information of the base stations accessed by the tag participating in sensing. In this example, the first device is determined first, and then the wireless sensing signal transmit end and the wireless sensing signal receive end are determined based on the base stations accessed by the first device.

For another example, the base station A and the base station B are determined from base stations that meet a sensing condition corresponding to the sensing requirement, and a tag accessing the base station A and the base station B is determined as a tag participating in sensing. In this example, the wireless sensing signal transmit end and the wireless sensing signal receive end are determined first, and then the first device is determined based on the base stations accessed by the tag.

(5) The SNF can schedule an associated base station of the target tag (the associated base station of the tag may include at least one of a serving base station of the tag and an associated base station in an area where the tag is located) to serve as a reader (reader) of the tag. For example, the base station can adjust a beam, read information from a storage area of a tag, or read polling information from storage areas of a plurality of tags in an area. After reading related information, the base station can report the information to the SNF, so as to update a-priori information stored and managed by the SNF or to use it as necessary or assistance information for the sensing service.

(6) The SNF can schedule an associated base station of the target tag to act as a writer (writer) of the tag. For example, the base station can adjust a beam, write information into a storage area of a tag, or write polling information into storage areas of a plurality of tags in an area.

(7) The SNF can schedule an associated base station of the target tag to perform tag selection. A tag selection operation of the base station in the sensing process can be indicated. For example, the base station can adjust a beam and select a tag that meets a sensing condition corresponding to the sensing requirement, so that the tag that meets the sensing requirement and the sensing condition enters a corresponding active state while other tags that do not meet the sensing requirement and the sensing condition are in an inactive state.

(8) The SNF can schedule an associated base station of the target tag to perform inventory for the tag. For example, the base station can adjust a beam, circularly scan all tags that meet a selection condition, and the tags return their EPC codes (EPC codes: codes used to identify tag attached objects) respectively.

(9) The SNF can schedule an associated base station of the target tag to provide power for the target tag.

(10) The second device is located at the core network or the base station side. If the second device is located at the base station side, all processes of the sensing service can be completed at the radio access network (Radio Access Network, RAN) side (for example, for a case that the sensing service is triggered for the base station or the UE triggers the sensing service).

(11) The second device may be a separate function/physical entity, or deployed in a general server of the core network as one of the core network functions, or deployed at the base station side as one of the functions of the base station.

(12) The second device may directly exchange a sensing request (including the sensing requirement information) and a sensing result with an application server (for example, an application server of the operator); or the second device exchanges a sensing request and a sensing result with the AMF, and the AMF can directly or indirectly exchange a sensing request and a sensing result with the application server (such as a third-party application server) (through a gateway mobile location center (Gateway Mobile Location Center, GMLC) and a network exposure function (Network Exposure Function, NEF)).

(13) Manage overall coordination and scheduling of resources required for sensing, such as sensing resources of the base station and/or LTE.

(14) Calculate or verify the target sensing result and estimate sensing precision.

(15) Support an immediate sensing request.

(16) Support a delayed sensing request.

(17) Support a periodic or event-triggered sensing request.

(18) Support canceling of a periodic or triggered sensing behavior.

(19) When the second device is a sensing network element, a plurality of sensing network elements may correspond to one AMF, or a single sensing network element may be connected to a plurality of AMFs. In a case that a plurality of sensing network elements may correspond to one AMF, when obtaining sensing requirement information, the AMF can determine, based on the sensing requirement information, at least one of the corresponding plurality of sensing network elements as a second device participating in a sensing process corresponding to the sensing requirement information.

Factors to be considered for determining a sensing network element participating in the sensing process by the AMF include at least one of the following: request QoS (such as sensing accuracy, response time, and sensing QoS level), access type (3GPP access/non-3GPP access), access network AN type (that is, 5G NR or eLTE) and serving AN node (that is, gNodeB or NG-eNodeB) of the target UE, RAN configuration information, capability of the sensing network element, load of the sensing network element, location of the sensing network element, indication of single event reporting or multi-event reporting, event reporting duration, network slice information, and the like.

(20) Based on a target area corresponding to the sensing requirement information (for example, the sensing requirement is a three-dimensional map of the sensing target area), information about a base station that may require interactive information is obtained through interaction with other network elements/functions in the core network.

It should be noted that for the whole sensing process, the core network (or the sensing network element), application server, or other nodes (such as the AMF) can complete the supervision procedure.

Optionally, in the foregoing step (3), a manner of determining the target UE by the core network function or network element (such as the sensing network function/sensing network element) may include at least one of the following:
being based on capability related information reported by the UE to the core network, that is, capability information of the UE meets the sensing requirement;
being based on fourth information of the UE, for example, location information of the UE (a location or area in which the UE is located) meets the sensing requirement; and
being based on whether the UE accesses a receive base station associated with the sensing requirement information, that is, the UE accesses a network-side device meeting the sensing requirement (in the following embodiments, the network-side device being a base station is used as an example for description), that is, the base station associated with the sensing requirement information is determined first, and then the UE is determined.

Correspondingly, in the foregoing step (3), a manner of determining an associated base station by the core network function or network element (such as the sensing network function/sensing network element) may include at least one of the following:
being based on whether it is an access base station of associated UE (that is, the UE is determined first and then the base station is determined), that is, base stations participating in sensing include a base station accessed by the terminal meeting the sensing requirement;
being based on capability related information reported by the base station to the core network, that is, capability information of the base station participating in sensing meets the sensing requirement; and
being based on fifth information of the base station, such as a location and area where the base station is located, that is, location information of the base station participating in sensing meets the sensing requirement.

Correspondingly, in the foregoing step (3), a manner of determining a target tag by the core network function or network element (such as the sensing network function/sensing network element) may include at least one of the following:
being based on whether an associated base station or UE is accessed (the base station or UE is determined first and then the tag is determined), that is, the tag participating in sensing accesses a terminal or network-side device meeting the sensing requirement;
being based on capability related information reported by the tag to the core network, that is, capability information of the tag participating in sensing meets the sensing requirement; and
being based on first information of the tag (including a tag location/area information, incident angle and reflection angle range information of the tag, status indication information for participating in sensing, and the like), that is, the a-priori information of the tag participating in sensing meets the sensing requirement.

In addition, in implementation, there may be an association between the sensing requirement and the sensing signal related configuration corresponding to the sensing requirement, so that a node obtaining the sensing requirement information can determine the sensing signal related configuration information based on the association between the sensing requirement and the sensing signal related configuration.

Certainly, corresponding sensing signal related configuration information may alternatively be determined based on the sensing requirement information in other manners (for example, a bandwidth of the sensing signal is determined based on a sensing resolution requirement), and a node that determines the corresponding sensing signal related configuration information based on the sensing requirement information may be at least one of the base station, the core network, the UE, and the second device.

Manner 1: The base station A (corresponding to a sensing signal transmission manner in which the base station A sends a sensing signal) or UE (corresponding to a sensing signal transmission manner in which the UE sends a sensing signal) reports its own sensing capability (a capability related to sending of sensing signals, such as a maximum bandwidth for sending sensing signals and a maximum transmit power of sensing signals) to the core network (the AMF or the sensing network element); and/or, the base station B reports its own sensing capability (a capability related to receiving of sensing signals, such as a maximum bandwidth for receiving sensing signals and a supported measurement quantity of sensing signals) to the core network (the AMF or the sensing network element); and/or, the base station A, the UE, or the base station B queries a sensing capability of a tag participating in sensing (a capability related to receiving and backscattering of sensing signals, such as a working bandwidth and frequency point and a maximum read-write frequency supported, where such information is stored in the tag) and then reports the sensing capability of the tag to the core network (the AMF or the sensing network element), and then the core network determines the sensing signal related configuration information based on the sensing requirement information and the capability information of the base station and/or the UE and/or the tag.

Manner 2: The base station A or the base station B (corresponding to a sensing signal transmission manner in which the base station A sends a sensing signal) or the UE and/or base station B (corresponding to a sensing signal transmission manner in which the UE sends a sensing signal) determines the sensing signal related configuration information based on the sensing requirement information.

Manner 3: The core network determines part of the sensing signal related configuration information, and the base station A and/or base station B (corresponding to a sensing signal transmission manner in which the base station A sends a sensing signal) or the UE and/or base station B (corresponding to a sensing signal transmission manner in which the UE sends a sensing signal) determines another part of the sensing signal related configuration information.

Manner 4: The core network recommends the sensing signal related configuration information to the base station A and/or base station B (corresponding to a sensing signal transmission manner in which the base station A sends a sensing signal) or to the UE and/or base station B (corresponding to a sensing signal transmission manner in which the UE sends a sensing signal), the base station A and/or base station B or the UE and/or base station B finally determines the sensing signal related configuration information.

Manner 5: The base station A and/or base station B (corresponding to a sensing signal transmission manner in which the base station A sends a sensing signal) or the UE and/or base station B (corresponding to a sensing signal transmission manner in which the UE sends a sensing signal) recommends the sensing signal related configuration information to the core network based on the sensing requirement, and the core network finally determines the sensing signal related configuration information.

Optionally, the sensing signal related configuration information includes at least one of the following:
waveform, such as orthogonal frequency division multiplex (Orthogonal frequency division multiplex, OFDM), SC-FDMA, orthogonal time frequency space (Orthogonal Time Frequency Space, OTFS), frequency modulated continuous wave (Frequency Modulated Continuous Wave, FMCW), pulse signal, and the like;
subcarrier spacing, for example, a subcarrier spacing of the OFDM system is 30KHz;
guard period, that is, a time interval from an end time of sending a signal to a time of receiving the latest echo signal of the signal, where the parameter is proportional to a maximum sensing distance and for example, can be calculated by 2dmax/c, dmax being a maximum sensing distance (belonging to the sensing requirement). For another example, for a sensing signal spontaneously sent and received, dmax represents a maximum distance from a sensing signal transceiver point to a signal transmit point, and c represents the speed of light. In some cases, a cyclic prefix CP of OFDM signals can act as a minimum guard period;
bandwidth, where this parameter is inversely proportional to a distance resolution and can be obtained by c/2/delta_d, where delta d represents a distance resolution (belonging to the sensing requirement) and c represents the speed of light;
burst (burst) duration, where this parameter is inversely proportional to a rate resolution (belonging to the sensing requirement), and this parameter is a time span of the sensing signal, mainly for calculating Doppler frequency shift; this parameter can be calculated by c/2/delta_v/fc, where delta_v represents a velocity resolution, and fc represents a carrier frequency of the sensing signal;
time domain interval, where this parameter can be calculated by c/2/fc/v_range; v_range represents a maximum rate minus a minimum speed (belonging to the sensing requirement), and this parameter is a time interval between two adjacent sensing signals;
signal transmit power, for example, taking one value every 2dBm from - 20dBm to 23dBm;
signal format, for identifying a format of the sensing signal, such as sounding reference signal (Sounding Reference Signal, SRS), demodulation reference signal (Demodulation Reference Signal, DMRS), positioning reference signal (Positioning Reference Signal, PRS), or other predefined signals, and information such as related sequence formats;
signal direction, such as a sensing signal direction or beam information;
time resource, such as a slot index or symbol index of a slot in which the sensing signal is located; where there are two types of time resources, one is a one-off time resource, for example, one omnidirectional first signal is sent on one symbol; the other is a non-one-off time resource, such as a plurality of groups of periodic time resources or discontinuous time resources (which may include a start time and an end time), sensing signals in the same direction are sent on each group of periodic time resources, and beam directions for different groups of periodic time resources are different;
frequency resource, including a central frequency point, bandwidth, resource block (Resource Block, RB) or subcarrier, reference frequency position (Point A), starting bandwidth position for the sensing signal, and the like;
Quasi co-location (Quasi co-location, QCL) relationship, where for example, the sensing signal includes a plurality of resources, and each resource corresponds to one synchronization signal and PBCH block (Synchronization Signal and PBCH block, SSB) QCL, and a type of QCL includes Type A, B, C, or D;
identification information of the first device, that is, an ID of a backscattering tag participating in wireless sensing, and the tag ID is not limited to an EPC of RFID, and may alternatively be an ID of a new device;
target sensing signal configuration related information of the first device, such as a tag working bandwidth, working frequency, the number of channels (channel), and subcarrier frequency corresponding to each channel;
initial phase of the target sensing signal, for example, an initial phase of signals on each channel;
antenna information of the first device, such as the number of transmit antennas, the number of receive antennas, and a layout of transmit and receive antenna arrays (including antenna formation and antenna spacing);
antenna information of the wireless sensing signal transmit end, including the number of antennas for sending the sensing signal by the base station, a specific antenna index, (index), antenna position coordinates (two-dimensional coordinates, three-dimensional coordinates, Cartesian coordinates, or polar coordinates, where the coordinates should belong to the same coordinate system as the tag participating in sensing);
time stamp information for sending the target sensing signal on each antenna, that is, an absolute or relative time of each signal transmission;
time interval for sending signals between different antennas, where, for example, if the base station uses time division multiplexing (Time Division Multiplexing, TDM) or TDM+frequency division multiplex (Frequency Division Multiplex, FDM) to send sensing signals on multiple antennas, the time interval for sending signals between different antennas needs to be configured;
amplitude modulation capability of the first device, that is, supported amplitude information for adjustable reflected signals, continuous amplitude modulation or discrete amplitude modulation, and the corresponding number of states of continuous or discrete characteristics;
phase modulation capability of the first device, that is, supported phase information for adjustable reflected signals, continuous phase modulation or discrete phase modulation, and the corresponding number of states of continuous or discrete characteristics;
frequency modulation capability of the first device, that is, supported frequency information for adjustable reflected signals, continuous frequency modulation or discrete frequency modulation, and the corresponding number of states of continuous or discrete characteristics;
encryption algorithm type of the first device, for example, CRC16 and CRC24;
type of channel coding of the first device such as forward error correction (Forward Error Correction, FEC) and its corresponding coding rate;
signal modulation mode related to the first device, including double sideband amplitude keying (DSB-ASK), single sideband amplitude keying (SSB-ASK), phase-reversal amplitude keying (Phase-reversal ASK, PR-ASK), frequency shift keying (Frequency Shift Keying, FSK), binary phase shift keying (Binary Phase Shift Keying, BPSK), quadrature phase shift keying (Quadrature Phase Shift Keying, QPSK), quadrature amplitude modulation (Quadrature Amplitude Modulation, QAM), and so on; and
data coding mode and frame format related to the first device, where, for example, a coding mode to be determined may be digital coding of backscattering communication currently in use and potentially to be used in the future, such as binary coding, Manchester (Manchester) code, FM0 code, delay modulation code (Miller code), non-return-to-zero (Non-return-to-zero, NRZ) code, bipolar non-return-to-zero code BNRZ code, non-return-to-zero inverse coding NRZ-I code, pulse width coding, and the like; and a frame format to be determined includes a preamble (preamble), frame-sync (frame-sync), or the like.

Optionally, the target measurement quantity includes:
a first measurement quantity, where the first measurement quantity is a measurement quantity related to the first device and includes at least one of the following:
a received signal strength indicator (Received Signal Strength Indicator, RSSI) and/or a received power of a reflected signal backscattered by the first device, a phase of the reflected signal, time stamp information of the reflected signal (time information inserted by a tag or tags in a tag array when signals are transmitted), a backscattering path channel matrix H of the first device, backscattering path channel state information CSI of the first device, a multipath number parameter for a backscattering path multipath channel of the first device (including the quantity of multipath, power, delay, and angle information of each path, and the like), a Doppler frequency and Doppler spread of the reflected signal, an angle of departure of the reflected signal (that is, an angle of departure of a transmitted signal of the tag/tag array), an arrival angle of the reflected signal (that is, an angle at which the base station receives a reflected signal of the tag/tag array), a phase difference between the first devices (for example, a phase difference between different tags in the tag array), a delay difference between the first devices (for example, a delay difference between different tags in the tag array), a phase difference between antennas of the first device (that is, a phase difference between different antennas of a same tag), a delay difference between the antennas of the first device (that is, a delay difference between different antennas of a same tag), and the unique identification information of the first device (the unique identification information is used to distinguish between first devices, or distinguish between first devices in a sensing area, such as a tag ID or a unique waveform sequence backscattered by the tag).

It should be noted that in implementation, the target measurement quantity may alternatively include a second measurement quantity, and the second measurement quantity may include at least one of the following:
characteristic information of a target object;
related information of a target event; and
related information of a target environment.

The characteristic information of the target object may be information that can reflect an attribute or a state of the target object, and may be at least one of the following : position of the target object, speed of the target object, acceleration of the target object, material of the target object, shape of the target object, category of the target object, and radar cross section (Radar Cross Section, RCS) of the target object. The related information of the target event is information related to the target event, that is, information that can be detected/sensed when the target event occurs, and may be at least one of the following: fall detection, intrusion detection, action recognition, respiratory monitoring, heart rate monitoring, and the like. The related information of the target environment may be at least one of the following: humidity, brightness, temperature and humidity, atmospheric pressure, air quality, weather conditions, topography, building/vegetation distribution, population statistics, crowd density, vehicle density, and the like.

In application, the first device may also have an information collection function, for example, the first device also includes a sensor, so that the first device can be further configured to collect the second measurement quantity.

Optionally, the first device further has an information collection function, and the method further includes:
collecting, by the first device, a second measurement quantity corresponding to a sensing target, where the first information includes the second measurement quantity.

The sensing target may be a sensing target in the wireless sensing method provided in this embodiment of this application. For example, when the sensing requirement information is a position of the sensing target object, the sensing target is a target object, and the second measurement quantity corresponding to the sensing target may be orientation information and location information of the target object collected by the first device by using a position sensor.

In this implementation, the information collection capability of the first device can be used to collect a sensing measurement quantity, and the collected sensing measurement quantity can be modulated onto the target sensing signal backscattered by the first device, so that the wireless sensing signal receive end can obtain the second measurement quantity based on the received target sensing signal. In this way, the first device can be used to provide an additional measurement quantity for wireless sensing, and a manner of transmitting a measurement quantity via signaling features lower power consumption and fewer signaling overheads compared to a device-based (device-based) sensing mode.

In some embodiments, the target measurement quantity is a measurement quantity for each antenna or a measurement quantity for each sensing resource. For example, the target measurement quantity is a measurement quantity for each antenna (port) at the sensing signal transmit end or sensing signal receive end, or the target measurement quantity is a measurement quantity of each sensing resource, such as a measurement quantity of each resource block (Resource Block, RB), subcarrier, or RB group.

It should be noted that the related information stored in the tag itself can be used as primary/assistance information for sensing and can be transmitted during the sensing process to a function or entity that implements conversion from the target measurement quantity to the target sensing result, so that the function or entity that implements conversion from the target measurement quantity to the target sensing result can determine a target sensing result based on the related information stored in the tag and/or the sensing measurement quantity obtained through measurement, The related information stored in the tag can be modulated onto a received CW signal, and the tag backscatters the modulated CW signal to directly or indirectly transmit the related information to a node (such as the core network (or the sensing network element), the application server, the base station, or the UE) that determines the target sensing result based on the target measurement quantity. In addition, the core network or the SNF can also schedule the base station or the UE to read the related information pre-stored in the first device, for example, sending second indication information to the base station or the UE. The second indication information is used to indicate the base station or UE to read the related information pre-stored in the first device.

For example, a process of obtaining by the UE B the related information pre-stored in the tag is as follows:

After determining a tag-based sensing mode according to the sensing requirement, the core network or the SNF further needs to determine whether an operation such as selection, inventory, and access (information read/write) needs to be performed on a tag participating in the sensing;
the core network or the SNF delivers a tag operation command (selection, inventory, access, and the like) to the base station A (in a sensing signal transmission manner in which the base station A sends a target sensing signal) or the UE (in a sensing signal transmission manner in which the UE sends a target sensing signal); optionally, the tag operation command can be included in the sensing requirement information;
the base station A or the UE performs sensing signal related configuration based on the sensing requirement information carrying the operation command for the tag, and sends the target sensing signal based on the sensing signal related configuration;
after receiving the target sensing signal, the tag demodulates the tag operation command and prepares the first information that needs to be backscattered; and
a sensing signal sent by the base station A contains an unmodulated continuous wave CW signal, and the tag modulates the to-be-backscattered first information onto the CW signal; and the base station B receives the CW signal and demodulates the received CW signal to obtain the first information; or, a sensing signal sent by the UE includes an unmodulated continuous wave CW signal, and the tag modulates the to-be-backscattered first information onto the CW signal; and the UE receives the CW signal and demodulates the received CW signal to obtain the first information.

In implementation, after receiving the target sensing signal backscattered by the tag (that is, the modulated continuous wave CW signal), the base station B may demodulate the target sensing signal to obtain the first information.

Further, depending on different functions or entities that implement conversion from the target measurement quantity to the target sensing result, the base station B may forward the obtained first information, the measured target measurement quantity, and other information to the core network, the UE, or other base stations; or the base station B may determine the target sensing result based on the first information, the measured target measurement quantity, and other information, and forwards the target sensing result to the initiator of the sensing service corresponding to the target perception requirement information through at least one of the core network, the UE, and other base stations. The process is the same as that in the foregoing embodiment in which at least one of the core network, the application server, the base station, or the UE determines the target sensing result based on the target measurement quantity, and the transmission manner of the target measurement quantity is the same, which is not repeated herein.

Optionally, the target measurement quantity may include:
demodulated information backscattered by the first device; and/or
a wireless sensing measurement quantity depending on participation of the first device or a wireless sensing measurement quantity not depending on participation of the first device.

The target measurement quantity includes the demodulated information backscattered by the tag (that is, the first information modulated by the tag onto the target sensing signal, such as a tag ID and position coordinate information of the tag); or may be the demodulated information backscattered by the tag plus at least one of a tag-based wireless sensing measurement quantity (tag-based measurement quantity) and a tag-free wireless sensing measurement quantity (tag-free measurement quantity).

The tag-based measurement quantity is a measurement quantity obtained after the signal is processed by the tag, for example, an RSSI/receive power and phase of a plurality of reflected signals of the sensing signal by the tag array, and the reflected signals are modulated by the tag and can be distinguished by different tag IDs; and
the tag-free measurement quantity is a measurement quantity that can be obtained without assistance of the tag, for example, the antenna array of the base station obtains an azimuth angle of the tag relative to the base station based on a phase of a reflected signal from the sensing target tag, without any processing on an incident sensing signal, where the phase of the reflected signal of the tag is a tag-free measurement quantity.

Similar to the target measurement quantity, the target sensing result may include a sensing result obtained based on the demodulated information backscattered by the tag (that is, the first information carried in the backscattered target sensing signal), or the demodulated information backscattered by the tag is directly used as the sensing result. In addition, the target sensing result may also include a sensing result obtained based on at least one of the two types: the tag-based measurement quantity and the tag-free measurement quantity, or the target sensing result may be a comprehensive sensing result obtained from the foregoing three types of sensing results.

In application, some a-priori information of the tag (the first information includes the a-priori information, which is collectively referred to as the first information in the following embodiments for ease of description) may be stored in the core network (or the sensing network element), or the base station, or the tag participating in sensing, and needs to be called or transferred during the sensing process. The first information may include at least one of the following: a tag ID list, status indication information for participation in sensing (which may be a flag bit for participation in sensing (indicating whether it is allowed or agreed to participate in sensing currently)), a sensing time period (indicating a start and end time/duration of participation in sensing), sensing service occupancy flag bit (or status indication information with a same meaning, indicating whether sensing service is currently being conducted), an incident angle and reflection angle range of the tag (the incident angle range is an incident angle range of the sensing signal that enables the tag to work normally; and the reflection angle range is a reflection angle range of a reflected signal of the tag), the number of tags in an associated area, and a tag location information list (two-dimensional or three-dimensional, Cartesian coordinates or polar coordinates including a tag and a reference system origin), a tag sensing distance list, a tag communication bandwidth list, a working frequency (that is, subcarrier frequency within bandwidth) list of channels of the tag, a tag modulation mode list, a read-write frequency supported, an array form list of the tag (including the number of array elements of a single tag array (one tag serves as one array element, the number of antennas of a single tag, and antenna arrangement information of a single tag)), an error statistical distribution parameter of a reflected signal phase of the tag, whether the tag is active, power information of an active tag, and the like.

### Embodiment 1

In a case that conversion from the target measurement quantity to the target sensing result is completed by the core network or the application server:
if the first information is stored in the core network (or the sensing network element), the core network (or the sensing network element) directly calls the first information stored by itself and uses it in the conversion process as one of the bases for generating a sensing result;
if the first information is stored in the base station, the core network (or the sensing network element) requires the base station to report the first information for use in the conversion process as one of the bases for generating a sensing result; and
if the first information is stored in the tag, the core network (or the sensing network element) indicates the base station A or the base station B to perform an operation such as selection, inventory, and access (information read/write) on the tag, and the base station A or the base station B reads the corresponding first information and sends it to the core network (or the sensing network element) as one of the bases for generating a sensing result.

### Embodiment 2

In a case that conversion from the target measurement quantity to the target sensing result is completed by the base station:
if the first information is stored in the core network (or the sensing network element), the core network (or the sensing network element) sends the first information necessary for sensing to the base station B as one of the bases for generating a sensing result by the base station B; or the core network (or the sensing network element) sends the first information necessary for sensing to the base station A, and the base station A sends the first information to the base station B as one of the bases for generating a sensing result by the base station B; or the core network (or the sensing network element) sends the first information necessary for sensing to both the base station A and the base station B as one of the bases for generating a sensing result by the base station B;
if the first information is stored in the base station, the base station directly calls the first information stored by itself and uses it in the conversion process as one of the bases for generating a sensing result; and
if the first information is stored in the tag, the core network (or the sensing network element) indicates the base station B to perform an operation such as selection, inventory, and access (information read/write) on the tag, and the base station B reads the corresponding first information and uses it as one of the bases for generating a sensing result; or the core network (or the sensing network element) indicates the base station A to perform an operation such as selection, inventory, and access (information read/write) on the tag, and the base station A reads and sends the corresponding first information to the base station B as one of the bases for generating a sensing result by the base station B.

### Embodiment 3

In a case that conversion from the target measurement quantity to the target sensing result is completed by the UE (which may be UE that sends the target sensing signal):
if the first information is stored in the core network (or the sensing network element), the core network (or the sensing network element) sends the first information necessary for sensing to the UE via non-access stratum NAS signaling; or the core network (or the sensing network element) sends the a-priori information of the tag necessary for sensing to the associated base station of the UE, the associated base station sends the first information to the UE, and the UE uses the received first information as one of the bases for generating a sensing result;
if the first information is stored in a base station, the base station sends the first information to the UE, and the UE uses the received first information as one of the bases for generating a sensing result; and
if the first information is stored in the tag, the core network (or the sensing network element) indicates the UE to perform an operation such as selection, inventory, and access (information read/write) on the tag, and the UE reads the corresponding first information as one of the bases for generating a sensing result; or the core network (or the sensing network element) indicates the base station B to perform an operation such as selection, inventory, and access (information read/write) on the tag, and the base station B reads the corresponding first information and sends it to the UE as one of the bases for generating a sensing result by the UE; or the core network (or the sensing network element) indicates the base station B to perform an operation such as selection, inventory, and access (information read/write) on the tag, the base station B reads the corresponding first information and sends it to the core network (or the sensing network element), the core network (or the sensing network element) sends the a-priori information of the tag necessary for sensing to the associated base station of the UE, the associated base station then sends the a-priori information of the tag to the UE, and the UE uses the received a-priori information of the tag as one of the bases for generating a sensing result.

It should be noted that when the related information of the tag is updated (for example, the tag moves (position coordinates change), a tag is added in the network, a tag is canceled (becomes invalid), or the like), communication between the core network (or sensing network element), the base station (base station, BS), and the tag can also be implemented through the foregoing process, current information of the tag can be obtained based on a communication result, and the a-priori information of the tag in the core network (or the sensing network element) can be updated accordingly.

As an optional implementation, the method further includes:
the first device cooperates with the wireless sensing signal transmit end and the wireless sensing signal receive end to perform reference measurement, where the reference measurement is used for obtaining a reference measurement quantity or a reference measurement result, and the target sensing result is determined based on the target measurement quantity and the reference measurement quantity or the reference measurement result.

For some tag-based sensing services, reference measurement is needed. The final sensing result needs to be determined based on a direct sensing result obtained after execution of the sensing service and a sensing result of the reference measurement. For example, for detection, positioning, and imaging of objects in an area where tags are distributed, reference measurement needs to be performed when an object is not in the area, and a corresponding measurement quantity is an RSSI or phase of the reflected signal of the tags. After the object enters the tag area, measurement is performed again to complete the sensing process. For another example, for sensing weather (such as humidity and rainfall) in an area where tags are distributed, reference measurement needs to be performed in a specific humidity or a no-rainfall period.

It should be noted that the foregoing process of reference measurement to obtain a reference measurement quantity or reference measurement result is similar to the foregoing process of obtaining a target measurement quantity or target measurement result, and a difference lies in that a sensing initiator of reference measurement is not necessarily a third-party application, and may alternatively be the core network (or the sensing network element), or a base station, or UE, and that the measurement environment may be different.

In implementation, the foregoing reference measurement quantity or reference measurement result may be stored in the core network (or the sensing network element) or the tag participating in sensing, or may be stored in the base station, so that the node that completes conversion from the target measurement quantity to the target measurement result can obtain the reference measurement quantity or reference measurement result. In addition, there is no strict requirement on a sequence of execution times of the reference measurement and the sensing service. For example, reference measurement can be executed first, and then the sensing service can be executed, so as to correct an error of the target measurement quantity or the target measurement result based on the reference measurement quantity or the reference measurement result; or the sensing service may be executed first, reference measurement is then executed, and finally the target sensing result is determined based on the target measurement quantity as well as the reference measurement quantity or the reference measurement result.

In this implementation, accuracy of the sensing result can be improved through reference measurement to reduce a sensing error.

In some embodiments, the sensing signal in the foregoing process can be sent by a plurality of base stations or UEs, and/or the sensing signal receive end may also be a plurality of base stations, and/or the number of tags participating in sensing may also be one or more. In this case, the core network needs to determine a base station set and UE set that send sensing signals, a tag set that participate in sensing, and a UE set that receive sensing signals, sends sensing signal related configuration information of the plurality of base stations or UEs and related information of tags participating in sensing to the corresponding plurality of base stations or UEs, and sends measurement quantities related to sensing signals that need to be measured by the receive base stations and the related information of tags participating in sensing to the corresponding receive base stations.

Optionally, a plurality of transmit base stations need to exchange sensing signal related configuration information with UEs (for example, the base station or UE acting as a coordinator sends the sensing signal related configuration information and the related information of tags participating in sensing to other transmit base stations and UEs, and sends sensing signal related measurement quantities and the related information of tags participating in sensing to other receive base stations). Message exchange between the core network function or network element (such as the sensing network function/sensing network element) and the UE in the foregoing procedure may be performed through the base station, or the message may be transparent to the base station, such as NAS signaling.

It should be noted that the base station in the foregoing procedure may be a TRP, for example, the base station A is a TRP A and the base station B is a TRP B. In this case, the TRP A and TRP B may belong to a same base station or different base stations.

In an optional implementation, before the backscattering, by a first device, a target sensing signal to a wireless sensing signal receive end, the method further includes:
obtaining, by the first device, a second sensing request message; and
outputting, by the first device, a second sensing response message, where the second sensing response message indicates that the first device agrees to participate in a sensing process corresponding to the second sensing request message and/or to provide the first information.

In some embodiments, the first device obtains the second sensing request message, which may be a second sensing request message received by the first device from the base station/core network, and the first device outputs the second sensing response message, which can be understood as: the first device generates the second sensing response message for the base station or other access devices to read, or modulates the second sensing response message onto a received wireless signal for the base station or other access equipment to receive. For example, the base station/core network initially selects a tag participating in sensing according to the sensing requirement information, and sends a second sensing request message to the selected tag, so as to read status indication information for participation in the sensing process. If it indicates that the tag agrees to participate in the sensing process, it can be determined as a first device participating in the sensing process, and if it indicates that the tag does not agree to participate in the sensing process, another tag may be reselected.

The first device may receive the second sensing request message from the base station/core network and feeds back the second sensing response message to the base station/core network to inform the base station/core network whether the first device agrees to participate in the sensing process or whether it agrees to provide the first information.

In this implementation, in the process of reflecting the sensing signal, the tag can choose to agree or refuse to participate in the sensing process and/or provide related a-priori information stored in the tag.

Certainly, in implementation, the first device can alternatively use other manners to choose to agree or refuse to participate in the sensing process and/or provide related a-priori information stored in the tag.

For example, when the base station/core network determines a tag participating in the sensing service (corresponding to the foregoing step (3)), the tag uses the status indication information for participation in sensing to indicate agreeing or refusing to participate in sensing and/or to provide the related a-priori information stored in the tag; or
after the base station/core network determines the tag participating in the sensing service (corresponding to the foregoing step (3)), the base station performs an operation such as selection, inventory, and access (information read/write) on the tag, and the tag uses the status indication information for participation in sensing to indicate agreeing or refusing to provide the related a-priori information stored in the tag; or
whether the tag can participate in the related sensing service is agreed in advance and stored in a related storage node of the core network (for example, a unified data repository (Unified Data Repository, UDR)). After receiving the sensing requirement and selecting tags participating in the sensing service (corresponding to the foregoing step (3)), the core network function or network element (for example, the sensing network function/sensing network element) accesses a storage node that stores information about whether an associated tag can participate in the related sensing service, so as to obtain information about whether the tag can participate in the related sensing service and/or provide related a-priori information stored in the tag.

Similar to the tag that chooses to agree or refuse to participate in the sensing process, the UE can also choose to agree or refuse to participate in the sensing process by using the following method:
after the core network function or network element (such as the sensing network function/sensing network element) sends the sensing requirement to the UE, the UE agrees or refuses, and then UE participating in the sensing service is selected from UEs that agree to provide the sensing requirement (corresponding to the foregoing step (3)); or
after selecting UEs participating in the sensing service (corresponding to the foregoing step (3)), the base station/core network sends a sensing request message to the associated UE, and the UE agrees or refuses; or
whether the UE can participate in the related sensing service is agreed in advance and stored in a related storage node of the core network, for example, a UDR. After receiving the sensing requirement and selecting UEs participating in the sensing service (corresponding to the foregoing step (3)), the core network function or network element (for example, the sensing network function/sensing network element) accesses a storage node that stores information about whether the UE can participate in the related sensing service, so as to obtain information about whether the UE can participate in the related sensing service.

In this embodiment of this application, the first device backscatters the target sensing signal to the wireless sensing signal receive end, where the target sensing signal comes from the wireless sensing signal transmit end, the wireless sensing signal transmit end includes the first terminal or the first network-side device, and the wireless sensing signal receive end includes the second network-side device. In this way, the target sensing signal sent by the wireless sensing signal transmit end is at least partially backscattered to the wireless sensing signal receive end by using the backscattering function of the first device. An additional sensing path can be provided for wireless sensing through the backscattering function of the first device. In addition, the first device with the backscattering function features a small size and low power consumption because of no power-consuming radio frequency link, and can be more conveniently arranged in an ISAC system than the wireless sensing signal transmit end and receive end, thereby improving sensing performance of the ISAC system.

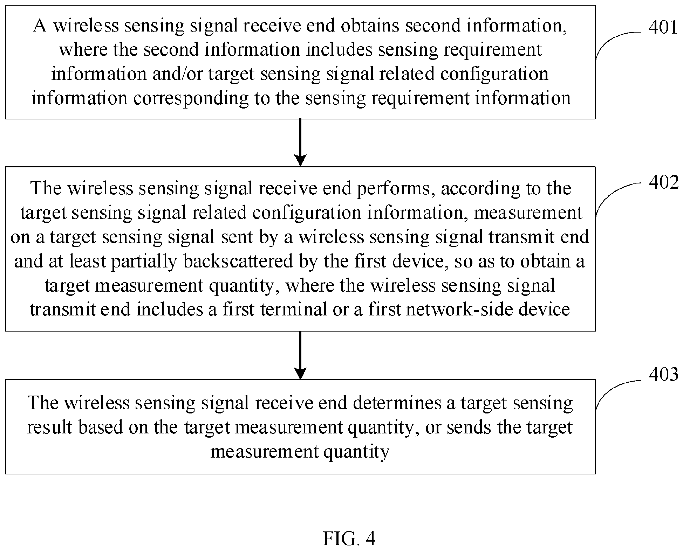

Refer to FIG. 4. FIG. 4 is a flowchart of a second wireless sensing method according to an embodiment of this application. A difference between the wireless sensing method shown in FIG. 4 and the wireless sensing method shown in FIG. 2 lies in that an execution subject of the wireless sensing method shown in FIG. 4 is a wireless sensing signal receive end, where the wireless sensing signal receive end may be a second network-side device (for example, a base station B or a TRP B shown in 3a), and an execution subject of the wireless sensing method shown in FIG. 2 is a first device. As shown in FIG. 4, the wireless sensing method executed by the wireless sensing signal receive end may include the following steps.

Step 401: The wireless sensing signal receive end obtains second information, where the second information includes sensing requirement information and/or target sensing signal related configuration information corresponding to the sensing requirement information.

Step 402: The wireless sensing signal receive end performs, according to the target sensing signal related configuration information, measurement on a target sensing signal sent by a wireless sensing signal transmit end and at least partially backscattered by the first device, so as to obtain a target measurement quantity, where the wireless sensing signal transmit end includes a first terminal or a first network-side device (for example, the UE or the base station A shown in FIG. 3a).

Step 403: The wireless sensing signal receive end determines a target sensing result based on the target measurement quantity, or sends the target measurement quantity.

The process of obtaining the sensing requirement information and/or sensing signal related configuration information, the transmission process of the target sensing signal, and the conversion process from the target measurement quantity to the target sensing result in this embodiment of this application are the same as those in the method embodiment shown in FIG. 2, which are not specifically limited herein.

In an optional implementation, the performing, by the wireless sensing signal receive end, according to the target sensing signal related configuration information, measurement on a target sensing signal sent by a wireless sensing signal transmit end and at least partially backscattered by the first device, so as to obtain a target measurement quantity includes:
receiving, by the wireless sensing signal receive end, a target sensing signal sequence coming from the wireless sensing signal transmit end and at least partially backscattered by the first device; and
performing, by the wireless sensing signal receive end, target signal processing based on the target sensing signal sequence and a preset sensing signal sequence to obtain the target measurement quantity, where the sensing signal related configuration information includes signal configuration information of the preset sensing signal sequence sent by the wireless sensing signal transmit end.

In this implementation, the sensing signal sent by the wireless sensing signal transmit end is a preset sensing signal sequence with at least one of signal parameters such as waveform, bit sequence, and frequency range being determined in advance. In this case, the first device may directly backscatter, to the wireless sensing signal receive end, a preset sensing signal sequence sent by the wireless sensing signal transmit end, so that the wireless sensing signal receive end can perform at least one of target signal processing such as matched filtering, cross correlation, and sliding correlation on the received target sensing signal sequence and the preset sensing signal sequence, so as to determine a target measurement quantity based on a result of target signal processing.

Certainly, in implementation, the sensing signal sent by the wireless sensing signal transmit end and at least partially backscattered by the first device can be a conventional sensing signal. In this case, the wireless sensing signal receive end can perform measurement on the received sensing signal to obtain a target measurement quantity such as a receiving frequency, a receiving time, or a receive power, and determines a target sensing result based on the target measurement quantity. In this embodiment, the backscattering function of the first device can be used to expand a transmission path of the sensing signal, thereby improving a sensing range and accuracy of the wireless sensing system.

In another optional implementation, the wireless sensing signal transmit end may send first indication information and the target sensing signal, where the first indication information is used to indicate the first device to modulate first information onto the target sensing signal, and correspondingly, the wireless sensing signal receive end can demodulate the received target sensing signal to obtain the first information carried by the target sensing signal, that is, the target measurement quantity may include the first information.

In this implementation, the wireless sensing signal receive end may demodulate the target sensing signal to obtain the first information pre-stored by the first device and modulated onto the sensing signal, so that the wireless sensing signal receive end can use the first information as one of the target measurement quantities, that is, using the first information as one of the bases for determining the target sensing result (other bases may be other sensing measurement quantities obtained by performing measurement on the target sensing signal and other information obtained in advance, such as antenna information and capability information of the wireless sensing signal transmit end), or directly using the first information as the target sensing result, which can improve comprehensiveness of sensing measurement quantities in the wireless sensing method, thereby improving sensing performance of the wireless sensing system.

Certainly, in implementation, the wireless sensing signal receive end can alternatively directly perform, according to the sensing signal related configuration information, measurement on at least part of the target sensing signal backscattered by the first device to obtain the target measurement quantity, which is not specifically limited herein.

Optionally, before the performing, by the wireless sensing signal receive end, according to the target sensing signal related configuration information, measurement on a target sensing signal sent by a wireless sensing signal transmit end and at least partially backscattered by a first device, so as to obtain a target measurement quantity, the second wireless sensing method further includes:
sending, by the wireless sensing signal receive end, the second information to the wireless sensing signal transmit end.

In this implementation, the second information obtained by the wireless sensing signal transmit end may be forwarded by the wireless sensing signal receive end. For example, as shown in FIG. 3a, the base station B receives the sensing requirement information from the core network or (the sensing network element) and sends the sensing requirement information and/or the wireless sensing signal related configuration information corresponding to the sensing requirement information to the UE. Certainly, in other implementations, the wireless sensing signal transmit end can alternatively forward the second information to the wireless sensing signal receive end.

Optionally, the target measurement quantity includes:
demodulated information backscattered by the first device; and/or
a wireless sensing measurement quantity depending on participation of the first device or a wireless sensing measurement quantity not depending on participation of the first device.

Optionally, the target sensing signal related configuration information includes at least one of the following:
a waveform, a subcarrier spacing, a guard period, a bandwidth, a burst (burst) duration, a time domain interval, a signal transmit power, a signal format, a signal direction, a time resource, a frequency resource, a quasi-co-location QCL relation, identification information of the first device, information related to a target sensing signal configuration of the first device, an initial phase of the target sensing signal, antenna information of the first device, antenna information of the wireless sensing signal transmit end, time stamp information of the target sensing signal sent by each antenna, a time interval for sending signals between different antennas, an amplitude modulation capability of the first device, a phase modulation capability of the first device, a frequency modulation capability of the first device, an encryption algorithm type of the first device, a coding rate corresponding to a channel coding type of the first device, a signal modulation mode related to the first device, a data coding mode related to the first device, and a frame format related to the first device.

Optionally, the target measurement quantity includes at least one of the following:
a first measurement quantity, where the first measurement quantity is a measurement quantity related to the first device and includes at least one of the following:
a received signal strength indicator RSSI and/or a received power of a reflected signal backscattered by the first device, a phase of the reflected signal, time stamp information of the reflected signal, a backscattering path channel matrix of the first device, backscattering path channel state information of the first device, a multipath number parameter for a backscattering path multipath channel of the first device, a Doppler frequency and Doppler spread of the reflected signal, an angle of departure of the reflected signal, an arrival angle of the reflected signal, a phase difference between the first devices, a delay difference between the first devices, a phase difference between antennas of the first device, a delay difference between the antennas of the first device, and the identification information of the first device.

Optionally, the second wireless sensing method further includes:
receiving, by the wireless sensing signal receive end, a target operation command; and
reading, by the wireless sensing signal receive end, first information of the first device according to the target operation command and sending the first information to a second device, where the target sensing result is a sensing result determined by the second device based on the target measurement result and the first information; where
the first information includes at least one of the following: an identifier of the first device, status indication information about the first device participating in sensing, a sensing time period of the first device, a sensing service occupancy flag bit, an incident angle and reflection angle range of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of a reflected signal of the first device, the number of transmit antennas of a single first device, the number of receive antennas of the single first device, antenna arrangement information of the single first device, arrangement information of an array including at least two first devices, an error statistical distribution parameter of a reflected signal phase of the first device, a power supply mode of the first device, power information of an active first device, an energy storage capability of the first device, an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

This implementation is similar to the method embodiment shown in FIG. 2, and the SNF may alternatively schedule the base station to read the related information pre-stored in the first device, which is not specifically limited herein.

Optionally, before the performing, by the wireless sensing signal receive end, according to the sensing signal related configuration information, measurement on a target sensing signal sent by a wireless sensing signal transmit end and at least partially backscattered by a first device, so as to obtain a target measurement quantity, the second wireless sensing method further includes:
sending, by the wireless sensing signal receive end, a first sensing response message in response to reception of the sensing requirement information or the first sensing request message, where the first sensing response message indicates that the wireless sensing signal receive end agrees to participate in a sensing process corresponding to the sensing requirement information or the first sensing request message.

This implementation is similar to the method embodiment shown in FIG. 2 in which the base station chooses to agree or refuse to participate in the sensing process, which is not described in detail herein.

Optionally, before the performing, by the wireless sensing signal receive end, according to the sensing signal related configuration information, measurement on a target sensing signal sent by a wireless sensing signal transmit end and at least partially backscattered by a first device, so as to obtain a target measurement quantity, the second wireless sensing method further includes:
the wireless sensing signal receive end cooperates with the wireless sensing signal transmit end and the first device to perform reference measurement to obtain a reference measurement quantity; and
the wireless sensing signal receive end determines a reference sensing result based on the reference measurement quantity, or sends the reference measurement quantity.

This implementation is similar to the reference sensing process in the method embodiment shown in FIG. 2, which is not described in detail herein.

The second wireless sensing method provided in this embodiment of this application corresponds to the method embodiment shown in FIG. 2, with similar beneficial effects achieved. To avoid repetition, details are not repeated herein.

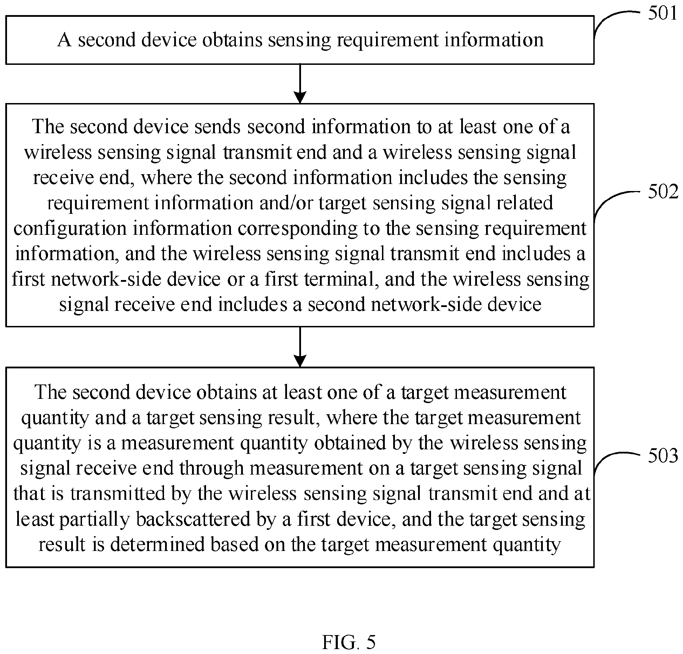

Refer to FIG. 5. FIG. 5 is a flowchart of a third wireless sensing method according to an embodiment of this application. A difference between the method embodiment shown in FIG. 5 and the method embodiment shown in FIG. 2 lies in that an execution subject of the method embodiment shown in FIG. 5 is a second device, and an execution subject of the method embodiment shown in FIG. 2 is a first device. As shown in FIG. 5, the wireless sensing method executed by the second device may include the following steps.

Step 501: The second device obtains sensing requirement information.

Step 502: The second device sends second information to at least one of a wireless sensing signal transmit end and a wireless sensing signal receive end, where the second information includes the sensing requirement information and/or target sensing signal related configuration information corresponding to the sensing requirement information, and the wireless sensing signal transmit end includes a first network-side device or a first terminal, and the wireless sensing signal receive end includes a second network-side device.

Step 503: The second device obtains at least one of a target measurement quantity and a target sensing result, where the target measurement quantity is a measurement quantity obtained by the wireless sensing signal receive end through measurement on a target sensing signal that is transmitted by the wireless sensing signal transmit end and at least partially backscattered by a first device, and the target sensing result is determined based on the target measurement quantity.

The process of obtaining the sensing requirement information and/or sensing signal related configuration information, the transmission process of the target sensing signal, and the conversion process from the target measurement quantity to the target sensing result in this embodiment of this application are the same as those in the method embodiment shown in FIG. 2, which are not specifically limited herein.

Optionally, the second device includes at least one of the following:
a sensing network element or sensing network functional entity in a core network; and
a sensing network element or sensing network functional entity in an access network.

Optionally, before the second device sends the second information to at least one of the wireless sensing signal transmit end and the wireless sensing signal receive end, the third wireless sensing method further includes:
determining, by the second device, at least one of the wireless sensing signal transmit end, the wireless sensing signal receive end, and the first device based on the sensing requirement information.

This implementation is similar to the process of determining at least one of the associated base station, the associated UE, and the tag participating in sensing by the core network function or network element (such as the sensing network function/sensing network element) based on the sensing requirement in the method embodiment shown in FIG. 2, which is not repeated herein.

Optionally, the determining, by the second device, the wireless sensing signal transmit end, the wireless sensing signal receive end, and the first device based on the sensing requirement information includes:
obtaining, by the second device, third information, where the third information includes fourth information of communicatively connected terminals, fifth information of communicatively connected network-side devices, and first information of communicatively connected first devices, where the fourth information includes at least one of capability information and location information of corresponding terminals, and the fifth information includes at least one of capability information and location information of corresponding network-side devices;
determining, by the second device, based on the third information and the sensing requirement information, a sensing type that the network-side device receives a target sensing signal sent by a terminal or another network-side device and backscattered by the first device;
determining, by the second device, based on at least one of the fourth information and the fifth information, the wireless sensing signal transmit end and the wireless sensing signal receive end that match the sensing type; and
determining, by the second device, the first device based on the first information; where
the first information includes at least one of the following: an identifier of the first device, status indication information about the first device participating in sensing, a sensing time period of the first device, a sensing service occupancy flag bit, an incident angle and reflection angle range of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of a reflected signal of the first device, the number of transmit antennas of a single first device, the number of receive antennas of the single first device, antenna arrangement information of the single first device, arrangement information of an array including at least two first devices, an error statistical distribution parameter of a reflected signal phase of the first device, a power supply mode of the first device, power information of an active first device, an energy storage capability of the first device, an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

This implementation is similar to the method embodiment shown in FIG. 2 in the process in which the base station and/or the UE reports respective capability information, and/or the base station reads and reports the related information stored in the tag, so that the core network or the sensing network element can select the first device participating in the sensing process, the wireless sensing signal transmit end, and the wireless sensing signal receive based on the capability information of the base station and/or the UE and/or the tag, which is not repeated herein.

Optionally, terminals in the wireless sensing signal transmit end and the wireless sensing signal receive end meet at least one of the following conditions:
capability information of the terminal meets the sensing requirement;
location information of the terminal meets the sensing requirement; and
accessing a network-side device that meets the sensing requirement;
   and/or,
a network-side device in the wireless sensing signal transmit end meets at least one of the following conditions:
   capability information of the network-side device meets the sensing requirement;
   location information of the network-side device meets the sensing requirement; and
   being a network-side device that is accessed by a terminal meeting the sensing requirement;
      and/or,
   the first device meets at least one of the following conditions:
      a-priori information of the first device meets the sensing requirement;
      capability information of the first device meets the sensing requirement; and
      accessing a terminal or network-side device that meets the sensing requirement.

Optionally, the target measurement quantity includes:
demodulated information backscattered by the first device; and/or
a wireless sensing measurement quantity depending on participation of the first device or a wireless sensing measurement quantity not depending on participation of the first device.

Optionally, the obtaining, by the second device, at least one of a target measurement quantity and a target sensing result includes:
obtaining, by the second device, the target measurement quantity and determining a target sensing result based on the target measurement quantity; or
obtaining, by the second device, the target measurement quantity, obtaining the first information of the first device, and determining a target sensing result based on the target measurement quantity and the first information; or
receiving, by the second device, a target sensing result coming from any one of the following:
   the wireless sensing signal transmit end, the wireless sensing signal receive end, a network-side device accessed by the wireless sensing signal transmit end, and a target core network element.

Optionally, the second device obtains the first information in the following manner:
the second device receives the first information from the wireless sensing signal receive end, where the sensing requirement information sent by the second device to the wireless sensing signal transmit end includes a target operation command, or target sensing signal related configuration information sent by the second device to the wireless sensing signal transmit end is determined based on sensing requirement information including the target operation command, and the target operation command is used to control the first device to carry the first information in the backscattered target sensing signal;
   or,
the second device sends second indication information to a network-side device or terminal accessed by the first device and receives the first information from the network-side device or terminal accessed by the first device, where the second indication information is used to indicate the network-side device or terminal accessed by the first device to read the first information;
   or,
the second device obtains the pre-stored first information.

In implementation, the second device may obtain the first information of the first device in the following manner: a serving base station or an associated base station of the tag reads an EPC code or tagID of the selected tag participating in the sensing process, and determines a-priori information of the selected target tag from a-priori information of a large number of tags stored in advance, or reads the a-priori information of the selected tag through the serving base station or the associated base station of the tag.

This embodiment of this application is similar to the method embodiment shown in FIG. 2, in which the core network, the base station, or the UE determines the target sensing result based on the target measurement quantity, or based on the target measurement quantity and the first information, which is not described in detail herein.

Optionally, the third wireless sensing method further includes at least one of the following:
calling, by the second device, an associated network-side device of the first device, and performing second processing on the first device through the associated network-side device, where the second processing includes at least one of the following: reading the first information, writing the first information, making inventory of the first information, supplying power for the first device, controlling the first device that meets a sensing condition corresponding to the sensing requirement information to be in an active state, and controlling the first device that does not meet the sensing condition to be in an inactive state; and the first device is located within a read/write range of the associated network-side device; and
performing, by the second device, first processing on the pre-stored first information, where the first processing includes at least one of update, delete, and add.

In this implementation, the associated network-side device of the first device can be understood as: the first device is located within coverage of the associated network-side device (such as a base station) of the first device, and intensity of the sensing signal transmitted between the two meets the sensing condition corresponding to the sensing requirement.

Optionally, the third wireless sensing method further includes:
obtaining, by the second device, a reference measurement quantity or a reference measurement result; where
the reference measurement quantity is a measurement quantity obtained by the wireless sensing signal receive end, the wireless sensing signal transmit end, and the first device by executing a reference sensing process, and the target sensing result is determined based on the target measurement quantity, the reference measurement quantity, or a reference measurement result corresponding to the reference measurement quantity.

Optionally, the obtaining, by the second device, a reference measurement quantity or a reference measurement result includes:
obtaining, by the second device, a pre-stored reference measurement quantity or reference measurement result, or receiving, by the second device, a reference measurement quantity or reference measurement result from at least one of the following:
the wireless sensing signal transmit end, the wireless sensing signal receive end, the first device, a network-side device accessed by the wireless sensing signal transmit end, a network-side device or terminal accessed by the first device, and a target core network element.

Optionally, that the second device obtains the sensing requirement information includes:
obtaining, by the second device, sensing requirement information sent or forwarded by the target core network element, where the target core network element includes an application server, an access and mobility management function AMF network element, or a network management system.

Optionally, before the sending, by the second device, second information to at least one of a wireless sensing signal transmit end and a wireless sensing signal receive end, the third wireless sensing method further includes:
obtaining, by the second device, target capability information, where the target capability information includes at least one of capability information of the wireless sensing signal transmit end, capability information of the wireless sensing signal receive end, and capability information of the first device; and
determining, by the second device, target sensing signal related configuration information based on the target capability information and the sensing requirement information;
   or,
sending, by the second device, first recommendation information to the wireless sensing signal transmit end based on the sensing requirement information, and receiving the target sensing signal related configuration information from the wireless sensing signal transmit end;
   or,
receiving, by the second device, second recommendation information from the wireless sensing signal transmit end, and determining the target sensing signal related configuration information based on the second recommendation information and the sensing requirement information;
   or,
receiving, by the second device, first configuration information from the wireless sensing signal transmit end and determining second configuration information based on the sensing requirement information, where the target sensing signal related configuration information includes the first configuration information and the second configuration information.

In some implementations, the process that the second device sends the first recommendation information to the wireless sensing signal transmit end based on the sensing requirement information and receives the sensing signal related configuration information from the wireless sensing signal transmit end is similar to the process in the method embodiment shown in FIG. 2 that the core network recommends the sensing signal related configuration information to the base station A (corresponding to a sensing signal transmission manner in which the base station A sends a sensing signal) or the UE (corresponding to a sensing signal transmission manner in which the UE sends a sensing signal) based on the sensing requirement, and the base station A or the UE finally determines the sensing signal related configuration information, which is not specifically limited herein.

In some other implementations, the process that the second device receives the second recommendation information from the wireless sensing signal transmit end and determines the sensing signal related configuration information based on the second recommendation information and the sensing requirement information is similar to the process in the method embodiment shown in FIG. 2 that the base station A (corresponding to a sensing signal transmission manner in which the base station A sends a sensing signal) or the UE (corresponding to a sensing signal transmission manner in which the UE sends a sensing signal) recommends the sensing signal related configuration information to the core network based on the sensing requirement, and the core network finally determines the sensing signal related configuration information, which is not specifically limited herein.

Optionally, the target sensing signal related configuration information includes at least one of the following:
a waveform, a subcarrier spacing, a guard period, a bandwidth, a burst (burst) duration, a time domain interval, a signal transmit power, a signal format, a signal direction, a time resource, a frequency resource, a quasi-co-location QCL relation, identification information of the first device, information related to a target sensing signal configuration of the first device, an initial phase of the target sensing signal, antenna information of the first device, antenna information of the wireless sensing signal transmit end, time stamp information of the target sensing signal sent by each antenna, a time interval for sending signals between different antennas, an amplitude modulation capability of the first device, a phase modulation capability of the first device, a frequency modulation capability of the first device, an encryption algorithm type of the first device, a coding rate corresponding to a channel coding type of the first device, a signal modulation mode related to the first device, a data coding mode related to the first device, and a frame format related to the first device.

Optionally, the target measurement quantity includes at least one of the following:
a first measurement quantity, where the first measurement quantity is a measurement quantity related to the first device and includes at least one of the following:
a received signal strength indicator RSSI and/or a received power of a reflected signal backscattered by the first device, a phase of the reflected signal, time stamp information of the reflected signal, a backscattering path channel matrix of the first device, backscattering path channel state information of the first device, a multipath number parameter for a backscattering path multipath channel of the first device, a Doppler frequency and Doppler spread of the reflected signal, an angle of departure of the reflected signal, an arrival angle of the reflected signal, a phase difference between the first devices, a delay difference between the first devices, a phase difference between antennas of the first device, a delay difference between the antennas of the first device, and the identification information of the first device.

Optionally, the target measurement quantity further includes a second measurement quantity collected by the first device, where the first device further has an information collection function.

In implementation, the second measurement quantity can be modulated onto the target sensing signal backscattered by the first device, so that the wireless sensing signal receive end can demodulate the received target sensing signal to obtain the second measurement quantity.

Certainly, in implementation, the wireless sensing signal receive end can alternatively obtain the second measurement quantity read from the first device, which is not specifically limited herein.

Optionally, the target measurement quantity is in one-to-one correspondence to a sensing antenna or sensing resource.

Optionally, that the second device sends the second information to at least one of the wireless sensing signal transmit end and the wireless sensing signal receive end includes:
the second device sends the second information to the wireless sensing signal transmit end, where the wireless sensing signal transmit end is configured to forward the second information to the wireless sensing signal receive end;
   or,
the second device sends the second information to the wireless sensing signal receive end, where the wireless sensing signal receive end is configured to forward the second information to the wireless sensing signal transmit end;
   or,
the second device sends the second information to the wireless sensing signal transmit end and send measurement requirement information to the wireless sensing signal receive end, where the measurement requirement information indicates a measurement quantity that is related to the target sensing signal and that needs to be measured by the wireless sensing signal receive end.

Optionally, the obtaining, by the second device, at least one of a target measurement quantity and a target sensing result includes at least one of the following:
receiving, by the second device, the target measurement quantity from the wireless sensing signal receive end or the wireless sensing signal transmit end, and sending the target measurement quantity to the target core network element, where the target sensing result is determined by the target core network element based on the target measurement quantity;
receiving, by the second device, the target measurement quantity from the wireless sensing signal receive end or the wireless sensing signal transmit end, and determining the target sensing result based on the target measurement quantity; and
receiving, by the second device, a target sensing result from the wireless sensing signal transmit end, the wireless sensing signal receive end, or a network-side device accessed by the wireless sensing signal transmit end, where the target sensing result is determined based on the target measurement quantity by the wireless sensing signal transmit end, the wireless sensing signal receive end, or the network-side device accessed by the wireless sensing signal transmit end.

The third wireless sensing method provided in this embodiment of this application corresponds to the method embodiment shown in FIG. 2 and FIG. 4, with similar beneficial effects achieved. To avoid repetition, details are not repeated herein.

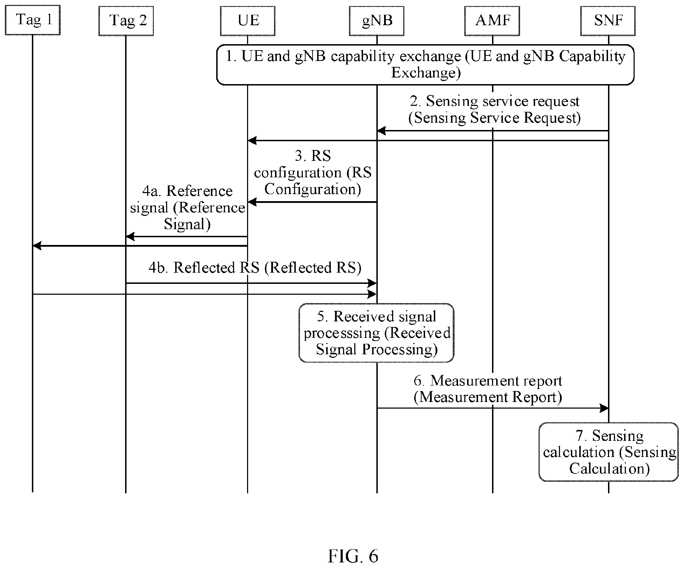

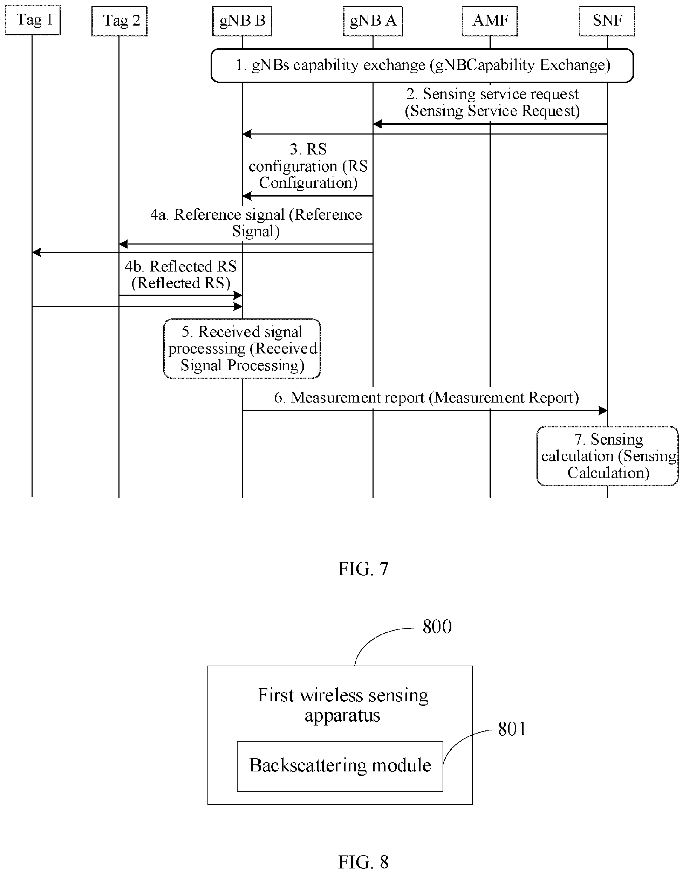

To facilitate the description of the wireless sensing method provided in the embodiments of this application, the wireless sensing method provided in the embodiments of this application is described by using the schematic diagram of information interaction shown in FIG. 6 and FIG. 7 as examples.

### Embodiment 1

In the embodiment shown in FIG. 6, it is assumed that a gNB receives a target sensing signal sent by UE and at least partially backscattered by a tag, and an SNF completes conversion from a target measurement quantity to a target sensing result. The wireless sensing method includes the following interaction processes:
1. An AMF and/or the SNF obtains capability information of the UE and the gNB.
2. The gNB and/or the UE obtains a sensing service request (including second information) from the SNF.
3. The gNB sends sensing signal related configuration information to the UE.
4a. The UE sends a target sensing signal (such as a reference signal).
4b. The tag (which may be one or at least two tags) backscatters the target sensing signal.
5. The gNB processes the target sensing signal backscattered by the tag to obtain a target measurement quantity.
6. The gNB sends a measurement report (including the target measurement quantity) to the SNF.
7. The SNF determines a target sensing result based on the target measurement quantity.

### Embodiment 2

In the embodiment shown in FIG. 7, it is assumed that a gNB B receives a target sensing signal sent by a gNB A and at least partially backscattered by a tag, and an SNF completes conversion from a target measurement quantity to a target sensing result. The wireless sensing method includes the following interaction processes:
1. An AMF and/or the SNF obtains capability information of the gNB (including the gNB A and the gNB B).
2. The gNB A and/or the gNB B obtain a sensing service request (including second information) from the SNF.
3. The gNB A sends sensing signal related configuration information to the gNB B.
4a. The gNB A sends a target sensing signal (such as a reference signal).
4b. The tag (which may be one or at least two tags) backscatters the target sensing signal.
5. The gNB B processes the target sensing signal backscattered by the tag to obtain a target measurement quantity.
6. The gNB B sends a measurement report (including the target measurement quantity) to the SNF.
7. The SNF determines a target sensing result based on the target measurement quantity.

An embodiment of this application further provides a wireless sensing system, including: a first device, a wireless sensing signal transmit end, and a wireless sensing signal receive end.

The wireless sensing signal transmit end includes a first network-side device or a first terminal, and the wireless sensing signal receive end includes a second network-side device;
at least one of the wireless sensing signal transmit end and the wireless sensing signal receive end is configured to obtain second information, where the second information includes the sensing requirement information and/or target sensing signal related configuration information corresponding to the sensing requirement information;
the wireless sensing signal transmit end is configured to determine the target sensing signal related configuration information based on the sensing requirement information and send a target sensing signal according to the sensing signal related configuration information, or the wireless sensing signal transmit end is configured to send the target sensing signal according to the obtained sensing signal related configuration information;
the first device is configured to backscatter the target sensing signal sent by the wireless sensing signal transmit end; and
the wireless sensing signal receive end is configured to perform measurement on a target sensing signal sent by the wireless sensing signal transmit end and at least partially backscattered by the first device, so as to obtain a target measurement quantity.

The first device in this embodiment of this application can perform the processes of the method embodiments shown in FIG. 2, and the wireless sensing signal receive end can perform the processes of the method embodiments shown in FIG. 4, which is not described herein again.

Optionally, the wireless sensing system further includes a second device;
the second device is communicatively connected to the wireless sensing signal transmit end, the wireless sensing signal receive end, and the first device separately; and
the second device is further configured to obtain sensing requirement information and send the sensing requirement information to at least one of the wireless sensing signal transmit end and the wireless sensing signal receive end; or determine the sensing signal related configuration information based on the sensing requirement information and send the sensing signal related configuration information to at least one of the wireless sensing signal transmit end and the wireless sensing signal receive end.

In this embodiment, the second device can perform the processes of the method embodiment shown in FIG. 5, which is not described herein again.

Optionally, a sensing signal sent by the wireless sensing signal transmit end is a preset sensing signal sequence, and the wireless sensing signal receive end is specifically configured to receive a target sensing signal sequence coming from the wireless sensing signal transmit end and at least partially backscattered by the first device, and perform target signal processing based on the target sensing signal sequence and a preset sensing signal sequence, so as to obtain a target measurement quantity, where the sensing signal related configuration information includes signal configuration information for the preset sensing signal sequence.

Optionally, the wireless sensing signal transmit end is further configured to send first indication information to the first device, the first indication information indicates first information that the first device needs to feed back to the wireless sensing signal receive end, and the first device is specifically configured to modulate the first information onto the target sensing signal, so that the wireless sensing signal receive end receives a modulated target sensing signal.

Optionally, the second device includes at least one of the following:
a sensing network element or sensing network functional entity in a core network; and
a sensing network element or sensing network functional entity in an access network.

Optionally, the first device includes at least one of a backscatter (Backscatter) tag and a radio frequency identification RFID tag.

Optionally, a first node is configured to determine a target sensing result based on fifth information, where the first node includes at least one of the wireless sensing signal transmit end, the wireless sensing signal receive end, the second device, and a network-side device accessed by the first terminal, and the fifth information includes the target measurement quantity or includes the target measurement quantity and a first target measurement quantity; or
the wireless sensing system further includes a target core network element, the first node is configured to send the fifth information to the target core network element, and the target core network element is configured to determine a target sensing result based on the fifth information.

Optionally, a second node is configured to send a reference measurement quantity or a reference measurement result to the first node or the target core network element; and
the first node or the target core network element is configured to determine the target sensing result based on the reference measurement quantity or the reference measurement result, and the fifth information, and the second node includes at least one of the wireless sensing signal transmit end, the wireless sensing signal receive end, the second device, a network-side device accessed by the first terminal, the first device, and a network-side device or terminal accessed by the first device.

Optionally, the second node is further configured to send a-priori information of the first device to the first node or the target core network element;
the first node or the target core network element is configured to determine the target sensing result based on the following information:
the reference measurement quantity or the reference measurement result;
the fifth information; and
the a-priori information of the first device.

Optionally, the target core network element includes an application server, an access and mobility management function AMF network element, or a network management system.

Optionally, terminals in the wireless sensing signal transmit end and the wireless sensing signal receive end meet at least one of the following conditions:
capability information of the terminal meets the sensing requirement;
location information of the terminal meets the sensing requirement; and
accessing a network-side device that meets the sensing requirement;
   and/or,
a network-side device in the wireless sensing signal transmit end meets at least one of the following conditions:
   capability information of the network-side device meets the sensing requirement;
   location information of the network-side device meets the sensing requirement; and
   being a network-side device that is accessed by a terminal meeting the sensing requirement;
      and/or,
   the first device meets at least one of the following conditions:
      a-priori information of the first device meets the sensing requirement;
      capability information of the first device meets the sensing requirement; and
      accessing a network-side device or terminal that meets the sensing requirement.

Optionally, the first device is attached to a sensing target corresponding to the sensing requirement information, or the first device is located in a target sensing area corresponding to the sensing requirement information.

The wireless sensing system provided in this embodiment of this application can perform the processes of the method embodiments shown in FIG. 2, FIG. 4, and FIG. 5, with the same beneficial effects achieved. To avoid repetition, details are not repeated herein.

In the wireless sensing method provided in the embodiments of this application, the execution subject may be a wireless sensing apparatus. In the embodiments of this application, the wireless sensing method being performed by the wireless sensing apparatus is used as an example to describe the wireless sensing apparatus provided in the embodiments of this application.

As shown in FIG. 8, a first wireless sensing apparatus provided in an embodiment of this application can be applied to a first device. As shown in FIG. 8, the first wireless sensing apparatus 800 may include the following module:
a backscattering module 801, configured to backscatter a target sensing signal to a wireless sensing signal receive end, where the target sensing signal comes from a wireless sensing signal transmit end, the wireless sensing signal transmit end includes a first terminal or a first network-side device, and the wireless sensing signal receive end includes a second network-side device.

Optionally, the first wireless sensing apparatus 800 further includes:
a first receiving module, configured to receive first indication information from the wireless sensing signal transmit end, where the first indication information is used to indicate first information that the first device needs to feed back to the wireless sensing signal receive end.

The backscattering module 801 is specifically configured to:
modulate the first information onto the target sensing signal, so that the wireless sensing signal receive end receives a modulated target sensing signal.

Optionally, the first device includes at least one of a backscatter (Backscatter) tag and a radio frequency identification RFID tag.

Optionally, the first information includes at least one of the following:
an identifier of the first device, status indication information about the first device participating in sensing, a sensing time period of the first device, a sensing service occupancy flag bit, an incident angle and reflection angle range of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of a reflected signal of the first device, the number of transmit antennas of a single first device, the number of receive antennas of the single first device, antenna arrangement information of the single first device, arrangement information of an array including at least two first devices, an error statistical distribution parameter of a reflected signal phase of the first device, a power supply mode of the first device, power information of an active first device, an energy storage capability of the first device, an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

Optionally, the first wireless sensing apparatus 800 further includes:
a fourth obtaining module, configured to obtain a second sensing request message; and
an outputting module, configured to output a second sensing response message, where the second sensing response message indicates that the first device agrees to participate in a sensing process corresponding to the second sensing request message and/or to provide the first information.

Optionally, the first device further has an information collection function, and the first wireless sensing apparatus 800 further includes:
a collection module, configured to collect a second measurement quantity corresponding to a sensing target, where the first information includes the second measurement quantity.

Optionally, the first wireless sensing apparatus 800 further includes:
a first reference measurement module, configured to cooperate with the wireless sensing signal transmit end and the wireless sensing signal receive end to perform reference measurement, where the reference measurement is used for obtaining a reference measurement quantity or a reference measurement result, and the target sensing result is determined based on the target measurement quantity and the reference measurement quantity or the reference measurement result.

The first wireless sensing apparatus 800 provided in this embodiment of this application can perform the processes executed by the first device in the method embodiment shown in FIG. 2, with the same beneficial effects achieved. To avoid repetition, details are not repeated herein.

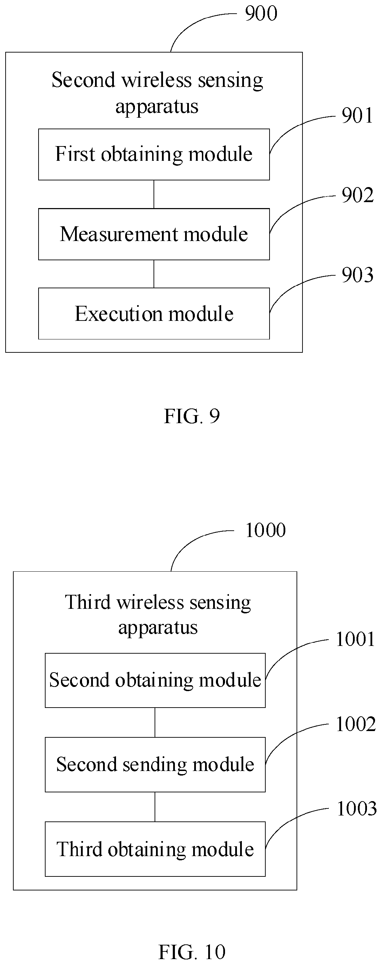

As shown in FIG. 9, a second wireless sensing apparatus provided in an embodiment of this application can be applied to a wireless sensing signal receive end. The wireless sensing signal receive end includes a second network-side device. As shown in FIG. 9, the second wireless sensing apparatus 900 may include the following modules:
a first obtaining module 901, configured to obtain second information, where the second information includes sensing requirement information and/or sensing signal related configuration information corresponding to the sensing requirement information;
a measurement module 902, configured to perform, according to the target sensing signal related configuration information, measurement on a target sensing signal sent by a wireless sensing signal transmit end and at least partially backscattered by a first device, so as to obtain a target measurement quantity, where the wireless sensing signal transmit end includes a first terminal or a first network-side device; and
an execution module 903, configured to determine a target sensing result based on the target measurement quantity or send the target measurement quantity.

Optionally, the measurement module 902 includes:
a receiving unit, configured to receive a target sensing signal sequence coming from the wireless sensing signal transmit end and at least partially backscattered by the first device; and
a signal processing unit, configured to perform target signal processing based on the target sensing signal sequence and a preset sensing signal sequence to obtain the target measurement quantity, where the sensing signal related configuration information includes signal configuration information of the preset sensing signal sequence sent by the wireless sensing signal transmit end.

Optionally, the second wireless sensing apparatus 900 further includes:
a second sending module, configured to send the second information to the wireless sensing signal transmit end.

Optionally, the target measurement quantity includes:
demodulated information backscattered by the first device; and/or
a wireless sensing measurement quantity depending on participation of the first device or a wireless sensing measurement quantity not depending on participation of the first device.

Optionally, the target sensing signal related configuration information includes at least one of the following:
a waveform, a subcarrier spacing, a guard period, a bandwidth, a burst (burst) duration, a time domain interval, a signal transmit power, a signal format, a signal direction, a time resource, a frequency resource, a quasi-co-location QCL relation, identification information of the first device, information related to a target sensing signal configuration of the first device, an initial phase of the target sensing signal, antenna information of the first device, antenna information of the wireless sensing signal transmit end, time stamp information of the target sensing signal sent by each antenna, a time interval for sending signals between different antennas, an amplitude modulation capability of the first device, a phase modulation capability of the first device, a frequency modulation capability of the first device, an encryption algorithm type of the first device, a coding rate corresponding to a channel coding type of the first device, a signal modulation mode related to the first device, a data coding mode related to the first device, and a frame format related to the first device.

Optionally, the target measurement quantity includes at least one of the following:
a first measurement quantity, where the first measurement quantity is a measurement quantity related to the first device and includes at least one of the following:
a received signal strength indicator RSSI and/or a received power of a reflected signal backscattered by the first device, a phase of the reflected signal, time stamp information of the reflected signal, a backscattering path channel matrix of the first device, backscattering path channel state information of the first device, a multipath number parameter for a backscattering path multipath channel of the first device, a Doppler frequency and Doppler spread of the reflected signal, an angle of departure of the reflected signal, an arrival angle of the reflected signal, a phase difference between the first devices, a delay difference between the first devices, a phase difference between antennas of the first device, a delay difference between the antennas of the first device, and the identification information of the first device.

Optionally, the second wireless sensing apparatus 900 further includes:
a second receiving module, configured to receive a target operation command; and
a reading module, configured to read first information of the first device according to the target operation command and send the first information to a second device, where the target sensing result is a sensing result determined by the second device based on the target measurement result and the first information; where
the first information includes at least one of the following: an identifier of the first device, status indication information about the first device participating in sensing, a sensing time period of the first device, a sensing service occupancy flag bit, an incident angle and reflection angle range of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of a reflected signal of the first device, the number of transmit antennas of a single first device, the number of receive antennas of the single first device, antenna arrangement information of the single first device, arrangement information of an array including at least two first devices, an error statistical distribution parameter of a reflected signal phase of the first device, a power supply mode of the first device, power information of an active first device, an energy storage capability of the first device, an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

Optionally, the second wireless sensing apparatus 900 further includes:
a response module, configured to send a first sensing response message in response to reception of the sensing requirement information or the first sensing request message, where the first sensing response message indicates that the wireless sensing signal receive end agrees to participate in a sensing process corresponding to the sensing requirement information or the first sensing request message.

Optionally, the second wireless sensing apparatus 900 further includes:
a second reference measurement module, configured to cooperate with the wireless sensing signal transmit end and the first device to perform reference measurement to obtain a reference measurement quantity; and
a first determining module, configured to determine a reference sensing result based on the reference measurement quantity or send the reference measurement quantity.

The second wireless sensing apparatus 900 provided in this embodiment of this application can perform the processes executed by the wireless sensing signal receive end in the method embodiment shown in FIG. 4, with the same beneficial effects achieved. To avoid repetition, details are not repeated herein.

The first wireless sensing apparatus 800 or the second wireless sensing apparatus 900 in the embodiments of this application may be an electronic device, such as an electronic device with an operating system, or a component in an electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

As shown in FIG. 10, a third wireless sensing apparatus provided in an embodiment of this application can be applied to a second device. As shown in FIG. 10, the third wireless sensing apparatus 1000 may include the following modules:
a second obtaining module 1001, configured to obtain sensing requirement information;
a first sending module 1002, configured to send second information to at least one of a wireless sensing signal transmit end and a wireless sensing signal receive end, where the second information includes the sensing requirement information and/or target sensing signal related configuration information corresponding to the sensing requirement information, and the wireless sensing signal transmit end includes a first network-side device or a first terminal, and the wireless sensing signal receive end includes a second network-side device; and
a third obtaining module 1003, configured to obtain at least one of a target measurement quantity and a target sensing result, where the target measurement quantity is a measurement quantity obtained by the wireless sensing signal receive end through measurement on a target sensing signal that is transmitted by the wireless sensing signal transmit end and at least partially backscattered by a first device, and the target sensing result is determined based on the target measurement quantity.

Optionally, the second device includes at least one of the following:
a sensing network element or sensing network functional entity in a core network; and
a sensing network element or sensing network functional entity in an access network.

Optionally, the third wireless sensing apparatus 1000 further includes:
a second determining module, configured to determine at least one of the wireless sensing signal transmit end, the wireless sensing signal receive end, and the first device based on the sensing requirement information.

Optionally, the second determining module includes:
an obtaining unit, configured to obtain third information, where the third information includes fourth information of communicatively connected terminals, fifth information of communicatively connected network-side devices, and first information of communicatively connected first devices, where the fourth information includes at least one of capability information and location information of corresponding terminals, and the fifth information includes at least one of capability information and location information of corresponding network-side devices;
a second determining unit, configured to determine, based on the third information and the sensing requirement information, a sensing type that the network-side device receives a target sensing signal sent by a terminal or another network-side device and backscattered by the first device;
a third determining unit, configured to determine, based on at least one of the fourth information and the fifth information, the wireless sensing signal transmit end and the wireless sensing signal receive end that match the sensing type; and
a fourth determining unit, configured to determine the first device based on the first information; where
the first information includes at least one of the following: an identifier of the first device, status indication information about the first device participating in sensing, a sensing time period of the first device, a sensing service occupancy flag bit, an incident angle and reflection angle range of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of a reflected signal of the first device, the number of transmit antennas of a single first device, the number of receive antennas of the single first device, antenna arrangement information of the single first device, arrangement information of an array including at least two first devices, an error statistical distribution parameter of a reflected signal phase of the first device, a power supply mode of the first device, power information of an active first device, an energy storage capability of the first device, an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

Optionally, terminals in the wireless sensing signal transmit end and the wireless sensing signal receive end meet at least one of the following conditions:
capability information of the terminal meets the sensing requirement;
location information of the terminal meets the sensing requirement; and
accessing a network-side device that meets the sensing requirement;
   and/or,
a network-side device in the wireless sensing signal transmit end meets at least one of the following conditions:
   capability information of the network-side device meets the sensing requirement;
   location information of the network-side device meets the sensing requirement; and
   being a network-side device that is accessed by a terminal meeting the sensing requirement;
      and/or,
   the first device meets at least one of the following conditions:
      a-priori information of the first device meets the sensing requirement;
      capability information of the first device meets the sensing requirement; and
      accessing a network-side device or terminal that meets the sensing requirement.

Optionally, the target measurement quantity includes:
demodulated information backscattered by the first device; and/or
a wireless sensing measurement quantity depending on participation of the first device or a wireless sensing measurement quantity not depending on participation of the first device.

Optionally, the third obtaining module 1003 is specifically configured to:
obtain the target measurement quantity and determine a target sensing result based on the target measurement quantity; or
obtain the target measurement quantity, obtain the first information of the first device, and determine a target sensing result based on the target measurement quantity and the first information; or
receive a target sensing result from any one of the following:
   the wireless sensing signal transmit end, the wireless sensing signal receive end, a network-side device accessed by the wireless sensing signal transmit end, and a target core network element.

Optionally, the second device obtains the first information in the following manner:
the second device receives the first information from the wireless sensing signal receive end, where the sensing requirement information sent by the second device to the wireless sensing signal transmit end includes a target operation command, or target sensing signal related configuration information sent by the second device to the wireless sensing signal transmit end is determined based on sensing requirement information including the target operation command, and the target operation command is used to control the first device to carry the first information in the backscattered target sensing signal;
   or,
the second device sends second indication information to a network-side device or terminal accessed by the first device and receives the first information from the network-side device or terminal accessed by the first device, where the second indication information is used to indicate the network-side device or terminal accessed by the first device to read the first information;
   or,
the second device obtains the pre-stored first information.

Optionally, the third wireless sensing apparatus 1000 further includes at least one of the following:
a calling module, configured to call an associated network-side device of the first device, and perform second processing on the first device through the associated network-side device, where the second processing includes at least one of the following: reading the first information, writing the first information, making inventory of the first information, supplying power for the first device, controlling the first device that meets a sensing condition corresponding to the sensing requirement information to be in an active state, and controlling the first device that does not meet the sensing condition to be in an inactive state; and the first device is located within a read-write range of the associated network-side device; and
a processing module, configured to perform first processing on the pre-stored first information, where the first processing includes at least one of update, delete, and add.

Optionally, the third wireless sensing apparatus 1000 further includes:
a fifth obtaining module, configured to obtain a reference measurement quantity or a reference measurement result; where
the reference measurement quantity is a measurement quantity obtained by the wireless sensing signal receive end, the wireless sensing signal transmit end, and the first device by executing a reference sensing process, and the target sensing result is determined based on the target measurement quantity, the reference measurement quantity, or a reference measurement result corresponding to the reference measurement quantity.

Optionally, the fifth obtaining module is specifically configured to:
obtain a pre-stored reference measurement quantity or reference measurement result, or receive a reference measurement quantity or reference measurement result from at least one of the following:
the wireless sensing signal transmit end, the wireless sensing signal receive end, the first device, a network-side device accessed by the wireless sensing signal transmit end, a network-side device or terminal accessed by the first device, and a target core network element.

Optionally, the second obtaining module 1001 is specifically configured to:
obtain sensing requirement information sent or forwarded by the target core network element, where the target core network element includes an application server, an access and mobility management function AMF network element, or a network management system.

Optionally, the third wireless sensing apparatus 1000 further includes:
a sixth obtaining module, configured to obtain target capability information, where the target capability information includes at least one of capability information of the wireless sensing signal transmit end, capability information of the wireless sensing signal receive end, and capability information of the first device; and
a third determining module, configured to determine target sensing signal related configuration information based on the target capability information and the sensing requirement information;
   or,
a transmission module, configured to send first recommendation information to the wireless sensing signal transmit end based on the sensing requirement information, and receiving the target sensing signal related configuration information from the wireless sensing signal transmit end;
   or,
a fourth determining module, configured to receive second recommendation information from the wireless sensing signal transmit end, and determining the target sensing signal related configuration information based on the second recommendation information and the sensing requirement information;
   or,
a fifth determining module, configured to receive first configuration information from the wireless sensing signal transmit end and determining second configuration information based on the sensing requirement information, where the target sensing signal related configuration information includes the first configuration information and the second configuration information.

Optionally, the target sensing signal related configuration information includes at least one of the following:
a waveform, a subcarrier spacing, a guard period, a bandwidth, a burst (burst) duration, a time domain interval, a signal transmit power, a signal format, a signal direction, a time resource, a frequency resource, a quasi-co-location QCL relation, identification information of the first device, information related to a target sensing signal configuration of the first device, an initial phase of the target sensing signal, antenna information of the first device, antenna information of the wireless sensing signal transmit end, time stamp information of the target sensing signal sent by each antenna, a time interval for sending signals between different antennas, an amplitude modulation capability of the first device, a phase modulation capability of the first device, a frequency modulation capability of the first device, an encryption algorithm type of the first device, a coding rate corresponding to a channel coding type of the first device, a signal modulation mode related to the first device, a data coding mode related to the first device, and a frame format related to the first device.

Optionally, the target measurement quantity includes at least one of the following:
a first measurement quantity, where the first measurement quantity is a measurement quantity related to the first device and includes at least one of the following:
a received signal strength indicator RSSI and/or a received power of a reflected signal backscattered by the first device, a phase of the reflected signal, time stamp information of the reflected signal, a backscattering path channel matrix of the first device, backscattering path channel state information of the first device, a multipath number parameter for a backscattering path multipath channel of the first device, a Doppler frequency and Doppler spread of the reflected signal, an angle of departure of the reflected signal, an arrival angle of the reflected signal, a phase difference between the first devices, a delay difference between the first devices, a phase difference between antennas of the first device, a delay difference between the antennas of the first device, and the identification information of the first device.

Optionally, the target measurement quantity further includes a second measurement quantity collected by the first device, where the first device further has an information collection capability.

Optionally, the target measurement quantity is in one-to-one correspondence to a sensing antenna or sensing resource.

Optionally, the first sending module 1002 is specifically configured to:
send second information to the wireless sensing signal transmit end, where the wireless sensing signal transmit end is configured to forward the second information to the wireless sensing signal receive end;
   or,
send second information to the wireless sensing signal receive end, where the wireless sensing signal receive end is configured to forward the second information to the wireless sensing signal transmit end;
   or,
send second information to the wireless sensing signal transmit end and send measurement requirement information to the wireless sensing signal receive end, where the measurement requirement information indicates a measurement quantity that is related to the target sensing signal and that needs to be measured by the wireless sensing signal receive end.

Optionally, the third obtaining module 1003 includes at least one of the following:
a first transmission unit, configured to receive the target measurement quantity from the wireless sensing signal receive end or the wireless sensing signal transmit end, and sending the target measurement quantity to the target core network element, where the target sensing result is determined by the target core network element based on the target measurement quantity;
a second transmission unit, configured to receive the target measurement quantity from the wireless sensing signal receive end or the wireless sensing signal transmit end, and determine the target sensing result based on the target measurement quantity; and
a third transmission unit, configured to receive a target sensing result from the wireless sensing signal transmit end, the wireless sensing signal receive end, or a network-side device accessed by the wireless sensing signal transmit end, where the target sensing result is determined based on the target measurement quantity by the wireless sensing signal transmit end, the wireless sensing signal receive end, or the network-side device accessed by the wireless sensing signal transmit end.

The third wireless sensing apparatus 1000 provided in this embodiment of this application can perform the processes executed by the second device in the method embodiment shown in FIG. 5, with the same beneficial effects achieved. To avoid repetition, details are not repeated herein.

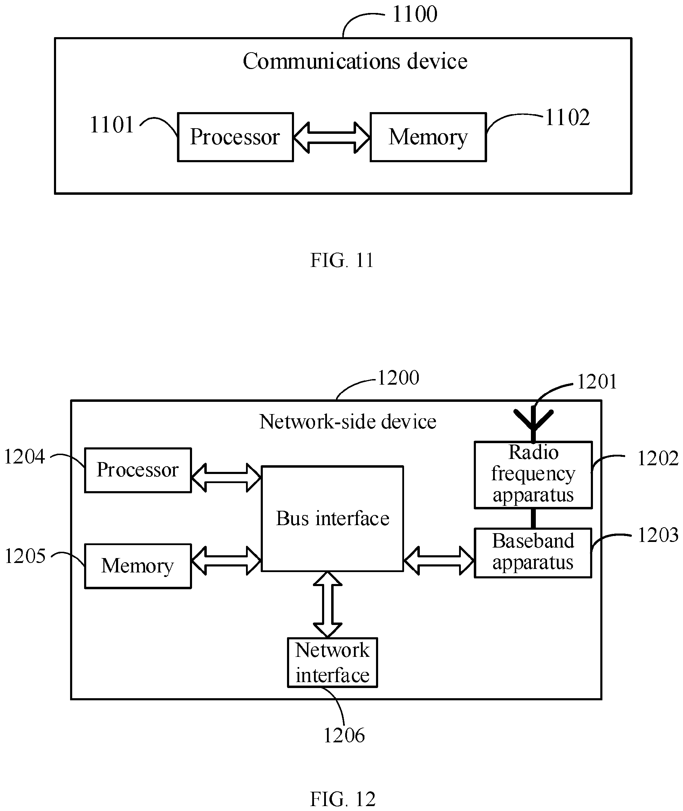

Optionally, as shown in FIG. 11, an embodiment of this application further provides a communications device 1100, including a processor 1101, a memory 1102, and a program or instructions stored in the memory 1102 and capable of running on the processor 1101. For example, when the communications device 1100 is a backscattering communications device and when the program or the instructions are executed by the processor 101, the steps of the foregoing embodiments of the method shown in FIG. 2 are implemented, with the same technical effects achieved. Alternatively, when the communications device 1100 is a network-side device and when the program or the instructions are executed by the processor 1101, the processes of the foregoing embodiment of the method shown in FIG. 4 or FIG. 5 are implemented, with the same technical effects achieved. To avoid repetition, details are not described herein again.

An embodiment of this application further provides a network-side device, including a processor and a communication interface.

In a case that the network-side device is a wireless sensing signal receive end, the communication interface is configured to obtain second information, where the second information includes sensing requirement information and/or target sensing signal related configuration information corresponding to the sensing requirement information. The communication interface is further configured to perform, according to the target sensing signal related configuration information, measurement on a target sensing signal sent by a wireless sensing signal transmit end and at least partially backscattered by a first device, so as to obtain a target measurement quantity, where the wireless sensing signal transmit end includes a first terminal or a first network-side device. The processor is configured to determine a target sensing result based on the target measurement quantity, or the communication interface configured to send the target measurement quantity;
or,
in a case that the network-side device is a second device, the communication interface is configured to obtain sensing requirement information and send second information to at least one of the wireless sensing signal transmit end and the wireless sensing signal receive end, where the second information includes the sensing requirement information and/or sensing signal related configuration information corresponding to the sensing requirement information, and the wireless sensing signal transmit end includes a first network-side device or a first terminal, and the wireless sensing signal receive end includes a second network-side device; the communication interface is further configured to obtain at least one of a target measurement quantity and a target sensing result, where the target measurement quantity is a measurement quantity obtained by the wireless sensing signal receive end through measurement on a target sensing signal sent by the wireless sensing signal transmit end and at least partially backscattered by the first device, and the target sensing result is determined based on the target measurement quantity.

The network-side device embodiments correspond to the embodiments shown in FIG. 4 or FIG. 5, and the implementation processes and implementations of the foregoing method embodiments can be applied to the network-side device embodiments, with the same technical effects achieved.

Specifically, an embodiment of this application further provides a network-side device. As shown in FIG. 12, the network-side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out by using the antenna 1201.

The method executed by the network-side device in the foregoing embodiments can be implemented in the baseband apparatus 1203, and the baseband apparatus 1203 includes a baseband processor.

The baseband apparatus 1203 may include, for example, at least one baseband board, where a plurality of chips are disposed on the baseband board. As shown in FIG. 12, one of the chips is, for example, a baseband processor and is connected to the memory 1205 through the bus interface, to invoke a program in the memory 1205 to perform the operation of the network device shown in the foregoing method embodiments.

The network-side device may further include a network interface 1206, where the interface is, for example, a common public radio interface (common public radio interface, CPRI).

Specifically, the network-side device 1200 in this embodiment of the present invention further includes: instructions or a program stored in the memory 1205 and capable of running on the processor 1204. The processor 1204 invokes the instructions or program in the memory 1205 to execute the method executed by the modules shown in FIG. 9 or FIG. 10 (the second device is located in the access network), with the same technical effects achieved. To avoid repetition, details are not repeated herein.

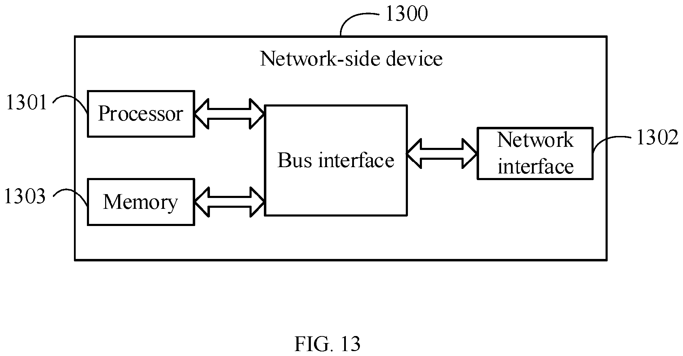

Specifically, an embodiment of this application further provides a core network network-side device. As shown in FIG. 13, the network-side device 1300 includes a processor 1301, a network interface 1302, and a memory 1303. The network interface 1302 is, for example, a common public radio interface CPRI.

Specifically, the network-side device 1300 in this embodiment of the present invention further includes: instructions or a program stored in the memory 1303 and capable of running on the processor 1301. The processor 1301 invokes the instructions or program in the memory 1303 to execute the method executed by the modules shown in FIG. 10 (the second device is located in the core network), with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing method embodiments shown in FIG. 2, FIG. 4, or FIG. 5 are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing method embodiments in FIG. 2, FIG. 4, or FIG. 5, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a readable storage medium, and when being executed by at least one processor, the computer program product is configured to implement the processes of the foregoing method embodiments shown in FIG. 2, FIG. 4, or FIG. 5, with the same technical effects achieved. To avoid repetition, details are not repeated herein.

An embodiment of this application further provides a wireless sensing system, including a terminal and a network-side device, where the network-side device may be configured to execute the steps of the wireless sensing method shown in FIG. 4 or FIG. 5.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A wireless sensing method, wherein the method comprises:
backscattering, by a first device, a target sensing signal to a wireless sensing signal receive end, wherein the target sensing signal comes from a wireless sensing signal transmit end, the wireless sensing signal transmit end comprises a first terminal or a first network-side device, and the wireless sensing signal receive end comprises a second network-side device.

2. The method according to claim 1, wherein before the backscattering, by a first device, a target sensing signal to a wireless sensing signal receive end, the method further comprises:
receiving, by the first device, first indication information from the wireless sensing signal transmit end, wherein the first indication information is used to indicate first information that the first device needs to feed back to the wireless sensing signal receive end; and
the backscattering, by a first device, a target sensing signal to a wireless sensing signal receive end comprises:
modulating, by the first device, the first information onto the target sensing signal, so that the wireless sensing signal receive end receives a modulated target sensing signal.

3. The method according to claim 2, wherein the first information comprises at least one of the following:
an identifier of the first device, status indication information about the first device participating in sensing, a sensing time period of the first device, a sensing service occupancy flag bit, an incident angle and reflection angle range of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of a reflected signal of the first device, the number of transmit antennas of a single first device, the number of receive antennas of the single first device, antenna arrangement information of the single first device, arrangement information of an array comprising at least two first devices, an error statistical distribution parameter of a reflected signal phase of the first device, a power supply mode of the first device, power information of an active first device, an energy storage capability of the first device, an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

4. The method according to any one of claims 1 to 3, wherein before the backscattering, by a first device, a target sensing signal to a wireless sensing signal receive end, the method further comprises:
obtaining, by the first device, a second sensing request message; and
outputting, by the first device, a second sensing response message, wherein the second sensing response message indicates that the first device agrees to participate in a sensing process corresponding to the second sensing request message and/or to provide the first information.

5. A wireless sensing apparatus, applied to a first device, wherein the apparatus comprises:
a backscattering module, configured to backscatter a target sensing signal to a wireless sensing signal receive end, wherein the target sensing signal comes from a wireless sensing signal transmit end, the wireless sensing signal transmit end comprises a first terminal or a first network-side device, and the wireless sensing signal receive end comprises a second network-side device.

6. A wireless sensing method, wherein the method comprises:
obtaining, by a wireless sensing signal receive end, second information, wherein the second information comprises sensing requirement information and/or target sensing signal related configuration information corresponding to the sensing requirement information, and the wireless sensing signal receive end comprises a second network-side device;
performing, by the wireless sensing signal receive end, according to the target sensing signal related configuration information, measurement on a target sensing signal sent by a wireless sensing signal transmit end and at least partially backscattered by a first device, so as to obtain a target measurement quantity, wherein the wireless sensing signal transmit end comprises a first terminal or a first network-side device; and
determining, by the wireless sensing signal receive end, a target sensing result based on the target measurement quantity, or sending the target measurement quantity.

7. The method according to claim 6, wherein the performing, by the wireless sensing signal receive end, according to the target sensing signal related configuration information, measurement on a target sensing signal sent by a wireless sensing signal transmit end and at least partially backscattered by a first device, so as to obtain a target measurement quantity comprises:
receiving, by the wireless sensing signal receive end, a target sensing signal sequence coming from the wireless sensing signal transmit end and at least partially backscattered by the first device; and
performing, by the wireless sensing signal receive end, target signal processing based on the target sensing signal sequence and a preset sensing signal sequence to obtain the target measurement quantity, wherein the sensing signal related configuration information comprises signal configuration information of the preset sensing signal sequence sent by the wireless sensing signal transmit end.

8. The method according to claim 6 or 7, wherein before the performing, by the wireless sensing signal receive end, according to the target sensing signal related configuration information, measurement on a target sensing signal sent by a wireless sensing signal transmit end and at least partially backscattered by a first device, so as to obtain a target measurement quantity, the method further comprises:
sending, by the wireless sensing signal receive end, the second information to the wireless sensing signal transmit end.

9. The method according to claim 6, wherein the target measurement quantity comprises:
demodulated information backscattered by the first device; and/or
a wireless sensing measurement quantity depending on participation of the first device or a wireless sensing measurement quantity not depending on participation of the first device.

10. The method according to any one of claims 6 to 9, wherein the target sensing signal related configuration information comprises at least one of the following:
a waveform, a subcarrier spacing, a guard period, a bandwidth, a burst (burst) duration, a time domain interval, a signal transmit power, a signal format, a signal direction, a time resource, a frequency resource, a quasi-co-location QCL relation, identification information of the first device, information related to a target sensing signal configuration of the first device, an initial phase of the target sensing signal, antenna information of the first device, antenna information of the wireless sensing signal transmit end, time stamp information of the target sensing signal sent by each antenna, a time interval for sending signals between different antennas, an amplitude modulation capability of the first device, a phase modulation capability of the first device, a frequency modulation capability of the first device, an encryption algorithm type of the first device, a coding rate corresponding to a channel coding type of the first device, a signal modulation mode related to the first device, a data coding mode related to the first device, and a frame format related to the first device.

11. The method according to any one of claims 6 to 10, wherein the target measurement quantity comprises at least one of the following:
a first measurement quantity, wherein the first measurement quantity is a measurement quantity related to the first device and comprises at least one of the following:
a received signal strength indicator RSSI and/or a received power of a reflected signal backscattered by the first device, a phase of the reflected signal, time stamp information of the reflected signal, a backscattering path channel matrix of the first device, backscattering path channel state information of the first device, a multipath number parameter for a backscattering path multipath channel of the first device, a Doppler frequency and Doppler spread of the reflected signal, an angle of departure of the reflected signal, an arrival angle of the reflected signal, a phase difference between the first devices, a delay difference between the first devices, a phase difference between antennas of the first device, a delay difference between the antennas of the first device, and the identification information of the first device.

12. The method according to claim 6 or 7, wherein the method further comprises:
receiving, by the wireless sensing signal receive end, a target operation command; and
reading, by the wireless sensing signal receive end, first information of the first device according to the target operation command and sending the first information to a second device, wherein the target sensing result is a sensing result determined by the second device based on the target measurement result and the first information; wherein
the first information comprises at least one of the following: an identifier of the first device, status indication information about the first device participating in sensing, a sensing time period of the first device, a sensing service occupancy flag bit, an incident angle and reflection angle range of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of a reflected signal of the first device, the number of transmit antennas of a single first device, the number of receive antennas of the single first device, antenna arrangement information of the single first device, arrangement information of an array comprising at least two first devices, an error statistical distribution parameter of a reflected signal phase of the first device, a power supply mode of the first device, power information of an active first device, an energy storage capability of the first device, an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

13. A wireless sensing apparatus, applied to a wireless sensing signal receive end, wherein the wireless sensing signal receive end comprises a second network-side device, and the apparatus comprises:
a first obtaining module, configured to obtain second information, wherein the second information comprises sensing requirement information and/or target sensing signal related configuration information corresponding to the sensing requirement information, and the wireless sensing signal receive end comprises a second network-side device;
a measurement module, configured to perform, according to the target sensing signal related configuration information, measurement on a target sensing signal sent by a wireless sensing signal transmit end and at least partially backscattered by a first device, so as to obtain a target measurement quantity, wherein the wireless sensing signal transmit end comprises a first terminal or a first network-side device; and
an execution module, configured to determine a target sensing result based on the target measurement quantity or send the target measurement quantity.

14. A wireless sensing method, wherein the method comprises:
obtaining, by a second device, sensing requirement information;
sending, by the second device, second information to at least one of a wireless sensing signal transmit end and a wireless sensing signal receive end, wherein the second information comprises the sensing requirement information and/or target sensing signal related configuration information corresponding to the sensing requirement information, and the wireless sensing signal transmit end comprises a first network-side device or a first terminal, and the wireless sensing signal receive end comprises a second network-side device; and
obtaining, by the second device, at least one of a target measurement quantity and a target sensing result, wherein the target measurement quantity is a measurement quantity obtained by the wireless sensing signal receive end through measurement on a target sensing signal that is transmitted by the wireless sensing signal transmit end and at least partially backscattered by a first device, and the target sensing result is determined based on the target measurement quantity.

15. The method according to claim 14, wherein before the sending, by the second device, second information to at least one of a wireless sensing signal transmit end and a wireless sensing signal receive end, the method further comprises:
determining, by the second device, at least one of the wireless sensing signal transmit end, the wireless sensing signal receive end, and the first device based on the sensing requirement information.

16. The method according to claim 15, wherein the determining, by the second device, the wireless sensing signal transmit end, the wireless sensing signal receive end, and the first device based on the sensing requirement information comprises:
obtaining, by the second device, third information, wherein the third information comprises fourth information of communicatively connected terminals, fifth information of communicatively connected network-side devices, and first information of communicatively connected first devices, wherein the fourth information comprises at least one of capability information and location information of corresponding terminals, and the fifth information comprises at least one of capability information and location information of corresponding network-side devices;
determining, by the second device, based on the third information and the sensing requirement information, a sensing type that the network-side device receives a target sensing signal sent by a terminal or another network-side device and backscattered by the first device;
determining, by the second device, based on at least one of the fourth information and the fifth information, the wireless sensing signal transmit end and the wireless sensing signal receive end that match the sensing type; and
determining, by the second device, the first device based on the first information; wherein
the first information comprises at least one of the following: an identifier of the first device, status indication information about the first device participating in sensing, a sensing time period of the first device, a sensing service occupancy flag bit, an incident angle and reflection angle range of the first device, the number of first devices in an associated area, location information of the first device, a sensing distance of the first device, a working bandwidth of the first device, a working frequency of each channel of the first device, a modulation mode of the first device, a read-write frequency supported by the first device, array form information of the first device, a signal-to-noise ratio of a reflected signal of the first device, the number of transmit antennas of a single first device, the number of receive antennas of the single first device, antenna arrangement information of the single first device, arrangement information of an array comprising at least two first devices, an error statistical distribution parameter of a reflected signal phase of the first device, a power supply mode of the first device, power information of an active first device, an energy storage capability of the first device, an amplitude modulation capability of the first device, a phase modulation capability of the first device, a frequency modulation capability of the first device, an encryption algorithm type of the first device, and a type of forward error correction code FEC for channel coding of the first device and a corresponding coding rate.

17. The method according to any one of claims 14 to 16, wherein the obtaining, by the second device, at least one of a target measurement quantity and a target sensing result comprises:
obtaining, by the second device, the target measurement quantity and determining a target sensing result based on the target measurement quantity; or
obtaining, by the second device, the target measurement quantity, obtaining the first information of the first device, and determining a target sensing result based on the target measurement quantity and the first information; or
receiving, by the second device, a target sensing result coming from one of the following:
the wireless sensing signal transmit end, the wireless sensing signal receive end, a network-side device accessed by the wireless sensing signal transmit end, and a target core network element.

18. The method according to claim 17, wherein the second device obtains the first information in the following manner:
the second device receives the first information from the wireless sensing signal receive end, wherein the sensing requirement information sent by the second device to the wireless sensing signal transmit end comprises a target operation command, or target sensing signal related configuration information sent by the second device to the wireless sensing signal transmit end is determined based on sensing requirement information comprising the target operation command, and the target operation command is used to control the first device to carry the first information in the backscattered target sensing signal;
or,
the second device sends second indication information to a network-side device or terminal accessed by the first device and receives the first information from the network-side device or terminal accessed by the first device, wherein the second indication information is used to indicate the network-side device or terminal accessed by the first device to read the first information;
or,
the second device obtains the pre-stored first information.

19. The method according to claim 17 or 18, wherein the method further comprises at least one of the following:
calling, by the second device, an associated network-side device of the first device, and performing second processing on the first device through the associated network-side device, wherein the second processing comprises at least one of the following: reading the first information, writing the first information, making inventory of the first information, supplying power for the first device, controlling the first device that meets a sensing condition corresponding to the sensing requirement information to be in an active state, and controlling the first device that does not meet the sensing condition to be in an inactive state; and the first device is located within a read-write range of the associated network-side device; and
performing, by the second device, first processing on the pre-stored first information, wherein the first processing comprises at least one of update, delete, and add.

20. The method according to any one of claims 14 to 19, wherein before the sending, by the second device, second information to at least one of a wireless sensing signal transmit end and a wireless sensing signal receive end, the method further comprises:
obtaining, by the second device, target capability information, wherein the target capability information comprises at least one of capability information of the wireless sensing signal transmit end, capability information of the wireless sensing signal receive end, and capability information of the first device; and
determining, by the second device, target sensing signal related configuration information based on the target capability information and the sensing requirement information;
or,
sending, by the second device, first recommendation information to the wireless sensing signal transmit end based on the sensing requirement information, and receiving the target sensing signal related configuration information from the wireless sensing signal transmit end;
or,
receiving, by the second device, second recommendation information from the wireless sensing signal transmit end, and determining the target sensing signal related configuration information based on the second recommendation information and the sensing requirement information;
or,
receiving, by the second device, first configuration information from the wireless sensing signal transmit end and determining second configuration information based on the sensing requirement information, wherein the target sensing signal related configuration information comprises the first configuration information and the second configuration information.

21. The method according to claim 20, wherein the target sensing signal related configuration information comprises at least one of the following:
a waveform, a subcarrier spacing, a guard period, a bandwidth, a burst (burst) duration, a time domain interval, a signal transmit power, a signal format, a signal direction, a time resource, a frequency resource, a quasi-co-location QCL relation, identification information of the first device, information related to a target sensing signal configuration of the first device, an initial phase of the target sensing signal, antenna information of the first device, antenna information of the wireless sensing signal transmit end, time stamp information of the target sensing signal sent by each antenna, a time interval for sending signals between different antennas, an amplitude modulation capability of the first device, a phase modulation capability of the first device, a frequency modulation capability of the first device, an encryption algorithm type of the first device, a coding rate corresponding to a channel coding type of the first device, a signal modulation mode related to the first device, a data coding mode related to the first device, and a frame format related to the first device.

22. The method according to any one of claims 14 to 19, wherein the target measurement quantity comprises at least one of the following:
a first measurement quantity, wherein the first measurement quantity is a measurement quantity related to the first device and comprises at least one of the following:
a received signal strength indicator RSSI and/or a received power of a reflected signal backscattered by the first device, a phase of the reflected signal, time stamp information of the reflected signal, a backscattering path channel matrix of the first device, backscattering path channel state information of the first device, a multipath number parameter for a backscattering path multipath channel of the first device, a Doppler frequency and Doppler spread of the reflected signal, an angle of departure of the reflected signal, an arrival angle of the reflected signal, a phase difference between the first devices, a delay difference between the first devices, a phase difference between antennas of the first device, a delay difference between the antennas of the first device, and the identification information of the first device.

23. The method according to any one of claims 14 and 22, wherein the obtaining, by the second device, at least one of a target measurement quantity and a target sensing result comprises at least one of the following:
receiving, by the second device, the target measurement quantity from the wireless sensing signal receive end or the wireless sensing signal transmit end, and sending the target measurement quantity to the target core network element, wherein the target sensing result is determined by the target core network element based on the target measurement quantity;
receiving, by the second device, the target measurement quantity from the wireless sensing signal receive end or the wireless sensing signal transmit end, and determining the target sensing result based on the target measurement quantity; and
receiving, by the second device, a target sensing result from the wireless sensing signal transmit end, the wireless sensing signal receive end, or a network-side device accessed by the wireless sensing signal transmit end, wherein the target sensing result is determined based on the target measurement quantity by the wireless sensing signal transmit end, the wireless sensing signal receive end, or the network-side device accessed by the wireless sensing signal transmit end.

24. A wireless sensing apparatus, applied to a second device, wherein the apparatus comprises:
a second obtaining module, configured to obtain sensing requirement information;
a first sending module, configured to send second information to at least one of a wireless sensing signal transmit end and a wireless sensing signal receive end, wherein the second information comprises the sensing requirement information and/or target sensing signal related configuration information corresponding to the sensing requirement information, and the wireless sensing signal transmit end comprises a first network-side device or a first terminal, and the wireless sensing signal receive end comprises a second network-side device; and
a third obtaining module, configured to obtain at least one of a target measurement quantity and a target sensing result, wherein the target measurement quantity is a measurement quantity obtained by the wireless sensing signal receive end through measurement on a target sensing signal that is transmitted by the wireless sensing signal transmit end and at least partially backscattered by a first device, and the target sensing result is determined based on the target measurement quantity.

25. A wireless sensing system, comprising: a first device, a wireless sensing signal transmit end, and a wireless sensing signal receive end; wherein
the wireless sensing signal transmit end comprises a first network-side device or a first terminal, and the wireless sensing signal receive end comprises a second network-side device;
at least one of the wireless sensing signal transmit end and the wireless sensing signal receive end is configured to obtain second information, wherein the second information comprises the sensing requirement information and/or target sensing signal related configuration information corresponding to the sensing requirement information;
the wireless sensing signal transmit end is configured to determine the target sensing signal related configuration information based on the sensing requirement information and send a target sensing signal according to the sensing signal related configuration information, or the wireless sensing signal transmit end is configured to send the target sensing signal according to the obtained sensing signal related configuration information;
the first device is configured to backscatter the target sensing signal sent by the wireless sensing signal transmit end; and
the wireless sensing signal receive end is configured to perform measurement on a target sensing signal sent by the wireless sensing signal transmit end and at least partially backscattered by the first device, so as to obtain a target measurement quantity.

26. The system according to claim 25, further comprising: a second device; wherein
the second device is communicatively connected to the wireless sensing signal transmit end, the wireless sensing signal receive end, and the first device separately; and
the second device is further configured to obtain sensing requirement information and send the sensing requirement information to at least one of the wireless sensing signal transmit end and the wireless sensing signal receive end; or determine the sensing signal related configuration information based on the sensing requirement information and send the sensing signal related configuration information to at least one of the wireless sensing signal transmit end and the wireless sensing signal receive end.

27. The system according to claim 25 or 26, wherein a sensing signal sent by the wireless sensing signal transmit end is a preset sensing signal sequence, and the wireless sensing signal receive end is specifically configured to receive a target sensing signal sequence coming from the wireless sensing signal transmit end and at least partially backscattered by the first device, and perform target signal processing based on the target sensing signal sequence and a preset sensing signal sequence, so as to obtain a target measurement quantity, wherein the sensing signal related configuration information comprises signal configuration information for the preset sensing signal sequence.

28. The system according to claim 25 or 26, wherein the wireless sensing signal transmit end is further configured to send first indication information to the first device, the first indication information indicates first information that the first device needs to feed back to the wireless sensing signal receive end, and the first device is specifically configured to modulate the first information onto the target sensing signal, so that the wireless sensing signal receive end receives a modulated target sensing signal.

29. The system according to claim 26, wherein a first node is configured to determine a target sensing result based on fifth information, wherein the first node comprises at least one of the wireless sensing signal transmit end, the wireless sensing signal receive end, the second device, and a network-side device accessed by the first terminal, and the fifth information comprises the target measurement quantity or comprises the target measurement quantity and a first target measurement quantity; or
the wireless sensing system further comprises a target core network element, the first node is configured to send the fifth information to the target core network element, and the target core network element is configured to determine a target sensing result based on the fifth information.

30. The system according to claim 29, wherein a second node is configured to send a reference measurement quantity or a reference measurement result to the first node or the target core network element; and
the first node or the target core network element is configured to determine the target sensing result based on the reference measurement quantity or the reference measurement result, and the fifth information, and the second node comprises at least one of the wireless sensing signal transmit end, the wireless sensing signal receive end, the second device, a network-side device accessed by the first terminal, the first device, and a network-side device or terminal accessed by the first device.

31. The system according to claim 30, wherein the second node is further configured to send a-priori information of the first device to the first node or the target core network element;
the first node or the target core network element is configured to determine the target sensing result based on the following information:
the reference measurement quantity or the reference measurement result;
the fifth information; and
the a-priori information of the first device.

32. The system according to any one of claims 25 to 31, wherein the first device is attached to a sensing target corresponding to the sensing requirement information, or the first device is located in a target sensing area corresponding to the sensing requirement information.

33. A network-side device, comprising a processor, a memory, and a program or instructions stored in the memory and capable of running on the processor, wherein when the program or instructions are executed by the processor, the steps of the wireless sensing method according to any one of claims 6 to 12 are implemented, or the steps of the wireless sensing method according to any one of claims 14 to 23 are implemented.

34. A readable storage medium, wherein the readable storage medium stores a program or instructions, and when the program or instructions are executed by a processor, the steps of the wireless sensing method according to any one of claims 1 to 4 are implemented, or the steps of the wireless sensing method according to any one of claims 6 to 12 are implemented, or the steps of the wireless sensing method according to any one of claims 14 to 23 are implemented.

35. A chip, comprising a processor and a communication interface, wherein the communication interface is coupled to the processor, and the processor is configured to run a program or instructions to implement the method according to any one of claims 1 to 4, or the method according to any one of claims 6 to 12, or the method according to any one of claims 14 to 23.

36. A computer program product, wherein the program product is stored in a nonvolatile storage medium, and the program product is executed by at least one processor to implement the method according to any one of claims 1 to 4, or the method according to any one of claims 6 to 12, or the method according to any one of claims 14 to 23.

37. A communications device, wherein the communications device is configured to perform the method according to any one of claims 1 to 4, or the method according to any one of claims 6 to 12, or the method according to any one of claims 14 to 23.
